(19) Europäisches Patentamt
European Patent Office
Office européen des brevets

(11) EP 1 204 108 A2

(12) EUROPEAN PATENT APPLICATION

(43) Date of publication:
**08.05.2002 Bulletin 2002/19**

(51) Int Cl.7: **G11B 7/24**, G11B 7/26

(21) Application number: **01125259.0**

(22) Date of filing: **24.10.2001**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **24.10.2000 EP 00123082**

(71) Applicant: **3M Innovative Properties Company**
**St. Paul, Minnesota 55133-3427 (US)**

(72) Inventor: **Schoeppel, Wolfgang**
**41470 Neuss (DE)**

(74) Representative: **VOSSIUS & PARTNER**
**Siebertstrasse 4**
**81675 München (DE)**

# (54) Optical storage medium and method of manufacture

(57) The present invention refers to an optical storage media, a method for the preparation thereof and to a method for improving the storage stability of optical storage media. The optical storage medium comprises one or more base members 1 bearing on the side of the base members 1 on which a light beam 6 is incident, one or more information storage layers 3, at least one light-transmissive cover film 5 and one or more light-transmissive adhesive layers 4 bonding said cover films 5 to each other, to the surface 2 of the base members 1 on which the light beam 6 is incident and/or to one or more information storage layers 3, said cover films 5 exhibiting a vertical birefringence of less than 0.001 at 20 °C at least at the wavelength or wavelength spectrum, respectively, of said light beam 6 and whereby the difference between the maximum radial deviation of the optical storage medium before and after being subjected to a temperature of 80 °C for 6 days is 0.4 degrees or less.

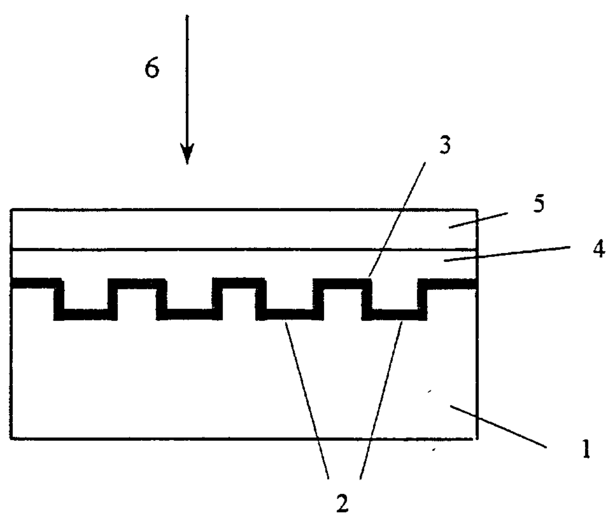


*Fig. 1a*

EP 1 204 108 A2

## Description

### Field of the invention

The present invention refers to an optical storage medium and, in particular, to a Digital Video Recordable disc (DVR) from which information can be read out and/or into which information can be recorded with a light beam, said optical storage medium comprising at least one base member bearing on the side of the base member on which the light beam is incident, one or more readable and/or recordable information storage layers and one or more light-transmissive cover films. The present invention furthermore refers to a method of manufacturing an optical storage medium and, in particular, to a Digital Video Recordable disc (DVR).

### Background of the invention

DVR discs exhibit a high storage capacity which renders them useful for digital recording and storage.

Typical constructions and formats of DVR discs are described, for example, in EP 0 729 141, EP 0 867 873 and EP 0 874 362.

DVR discs generally comprise a disc-shaped substrate or base member exhibiting on one or both major surfaces an information storage layer comprising a structure of lands and grooves. The DVR discs further comprise a light-transmissive cover film which is applied to the information storage layer.

EP 1 047 055 discloses that the transmittance of optical storage media and, in particular, DVRs, with respect to linearly polarized light can be improved by using light-transmissive cover films being essentially optically isotropic and, more preferably, exhibiting a vertical birefringence of less than 0.001 in each case at least at 20 °C and at least at the wavelength or wavelength spectrum, respectively, of the impinging light beam. EP 1 047 055 discloses that light-transmissive cover films with low or very low values of the vertical birefringence can be obtained by casting processes including solvent-casting and polymerization-casting techniques.

Optical storage media are often used to record information such as business data, films, and music. This information should not only be safely stored for a short period of time but it is desired that it can be read out of the optical storage medium without any errors months and even years after it was first stored. This is especially problematic in the case of compact discs, which are often submitted to both high and low temperatures e.g if they are kept in a car.

Recently optical storage media have become popular for archiving purposes. In this case the storage conditions are usually carefully controlled and no large temperature variations occur, but the optical storage media must be stable for very long periods of time which is difficult to guarantee with the present optical storage media.

Although the properties of the optical storage media described in the prior art may be sufficient directly after manufacturing, the error rate on the retrieval of data increases with storage time. It was therefore an object of the present invention to provide optical storage media having improved storage stability.

It has now been found that the storage problems can be alleviated and optical storage media having long term stability can be provided by using an improved cover film in the manufacture of the optical storage media.

### Brief description of the invention

The present invention relates to an optical storage medium from which information can be read out and/or into which information can be recorded with a light beam, said optical storage medium comprising one or more base members bearing on the side of the base members on which the light beam is incident, one or more information storage layers, at least one light-transmissive cover film and one or more light-transmissive adhesive layers bonding said cover films to each other, to the surface of the base members on which the light beam is incident and/or to one or more information storage layers, said cover films exhibiting a vertical birefringence of less than 0.001 at 20 °C at least at the wavelength or wavelength spectrum, respectively, of said light beam and whereby the difference between the maximum radial deviation of the optical storage medium before and after being subjected to a temperature of 80 °C for 6 days is 0.4 degrees or less.

In a further embodiment the invention refers to an optical storage medium from which information can be read out and/or into which information can be recorded with a light beam 6, said optical storage medium comprising one or more base members 1 bearing on the side of the base members 1 on which the light beam 6 is incident, one or more information storage layers 3, at least one light-transmissive cover film 5 and one or more light-transmissive adhesive layers 4 bonding said cover films 5 to each other, to the surface 2 of the base members 1 on which the light beam 6 is incident and/or to one or more information storage layers 3, at least one of said cover films 5 being obtainable by solvent casting and whereby the difference between the maximum radial deviation of the optical storage medium before and after being subjected to a temperature of 80 °C for 6 days is 0.4 degrees or less.

Furthermore, the present invention relates to a process for preparing an optical storage medium as described

above comprising:

(1) providing at least one base member having a surface on which a light beam is incident, said surface optionally comprising a structure of lands, grooves and/or pits bearing an information storage layer,
(2) providing at least one light-transmissive cover film the inner surface of which optionally comprising a structure of pits bearing an information storage layer;
(3) providing at least one light-transmissive adhesive layer;
(4) assembling the at least one base member, the at least one light-transmissive cover film and the at least one light-transmissive adhesive layer to form an optical storage medium whereby the difference between the maximum radial deviation of the optical storage medium before and after being subjected to a temperature of 80 °C for 6 days is 0.4 degrees or less.

In yet another embodiment the invention relates to a method for improving the storage stability of an optical storage medium from which information can be read out and/or into which information can be recorded with a light beam 6, said optical storage medium comprising one or more base members 1 bearing on the side of the base members 1 on which the light beam 6 is incident, one or more information storage layers 3, at least one light-transmissive cover film 5 and one or more light-transmissive adhesive layers 4 bonding said cover films 5 to each other, to the surface 2 of the base members 1 on which the light beam 6 is incident and/or to one or more information storage layers 3, by employing at least one solvent cast cover film 5 which is selected so that the difference between the maximum radial deviation of the optical storage medium before and after being subjected to a temperature of 80 °C for 6 days is 0.4 degrees or less.

<u>Brief description of the figures</u>

*Fig. 1a* schematically shows a specific embodiment of the optical recording media according to the present invention comprising a base member 1, the surface 2 of which where the light beam 6 is incident upon, comprises a structure of lands and grooves which forms part of an information storage layer 3, said optical storage medium further comprising a light-transmissive cover film 5 bonded to the information storage layer 3 by means of an adhesive layer 4.

*Fig. 1b* schematically shows another specific embodiment of the optical recording media according to the present invention comprising a base member 1, the surface 2 of which comprises a structure of lands and grooves which forms part of a first information storage layer 3a, said optical storage medium further comprising a light-transmissive cover film 5 onto which the light beam 6 is incident upon, the surface 9 of which comprises a structure of lands and grooves which forms part of a second information storage layer 3b which is bonded to the information storage layer 3a by means of an adhesive layer 4.

*Fig. 2* schematically shows the lamination of a first laminate comprising a releasable protective film 7 and a light-transmissive cover film 5 to a second laminate comprising an adhesive layer 4 and a smooth release liner 8 between two rollers 50, 51 so that the exposed surface of the adheseive layer 4 is adhered to the exposed surface of the cover film 5.

*Fig. 3* schematically shows removal of the release liner 8 from a laminate comprising in the order given a releasable protective film 7, a cover film 5 and an adhesive layer 4 by drawing the release liner over roller 52 providing a bondable laminate 12, attachment of such laminate to a vacuum plate holder 53 by means of air suction and subsequent die-cutting to provide a disc-shaped laminate having a center hole 10 and an outer circumference 11, the die cutting tool not being shown but indicated only by arrows.

*Fig. 4* schematically shows a disc-shaped laminate comprising in the order given a releasable protective film 7, a cover film 5 and an exposed adhesive layer 4, said laminate having a center hole 10 and an outer circumference 11 and being attached to the vacuum plate holer 53 by means of air suction.

*Fig. 5* schematically shows a vacuum bonding apparatus 60 having an upper vacuum chamber 56 and a bottom pressure chamber 58, the vacuum chamber 56 being pumpable by means of pump 55 and the bottom chamber 58 being pressurizable and pumpable by means of a pump 57, the upper chamber comprising a top plate 54, a movable bottom plate 59, and optionally a removable plate holder 53, separating the upper chamber 56 an the bottom chamber 58 in combination with a flexible seal 61, the bottom plate 59 bearing a die-cut laminate of releasable protective layer 7, cover film 5 and adhesive layer 4 and the top plate 54 holding the base member 1 bearing the information storage layer 3.

*Fig. 6* shows the maximum radial deviation values of the optical discs investigated in Example 2.

*Fig. 7* shows the minimum radial deviation values of the optical discs investigated in Example 2.

*Fig. 8* illustrates the decrease in the amount of residual methylene chloride during the heat treatment of Example 3.

*Fig. 9* demonstrates the influence of the amount of residual methylene chloride on the maximum radial deviation in Example 5.

*Fig. 10* demonstrates the influence of the amount of residual methylene chloride on the minimum radial deviation in Example 5.

It should be noted that the figures are schematic only and, in particular, not drawn to scale. In Fig. 1a the thickness of the base member 1 typically is up to one order of magnitude or more larger than the thickness of the cover film 5 whereas the depth of the grooves is typically in the range of 5 to 50 nm and thus negligible in comparison to the thickness of the base member 1.

## Detailed description of the invention

Above and below, the terms "film" and "layer" are used interchangeably and refer to articles having an extension in the x-y-plane which is large (i. e. at least, e. g., 3 times or more) with respect to its extension in z-direction (i. e. of its thickness).

The optical storage media of the present invention comprise at least one base member bearing on the side of the base on which the light is incident, one or more information storage layers which may be readable and/or recordable, at least one light-transmissive adhesive layer and at least one light-transmissive cover film. In addition the optical storage media of the present invention can contain further conventional layers such as scratch-resistant layers and anti-static layers.

Fig. 1a shows as an example a schematic representation of a cross-sectional view of a specific embodiment of an optical storage medium according to the present invention comprising a base member 1 exhibiting on its major surface 2 on the side where the light 6 is incident upon, a structure of lands and grooves which forms part of the information storage layer 3. The information storage layer 3 bears the adhesive layer 4 and the light-transmissive cover film 5 is bonded to.

More complex constructions of optical storage media which are useful in the present invention, are described, for example, in EP 0 867 873 which is incorporated herein by reference. The optical storage media may comprise, for example, two or more information storage layers 3 arranged above each other on one or two, respectively, major surfaces of the substrate. Fig. 1b schematically shows a construction comprising two information storage layers 3a, 3b applied to the inner surface 2 of the base member and the inner surface 9 of the light-transmissive cover film, respectively.

The base member 1 may be of any shape but preferably is a disc exhibiting a centre hole useful for centering the assembled optical storage medium in a recording or playing station. The disc or annulus shaped substrates preferably have an outer diameter of about 10 to about 360 mm and an inner diameter of the centre hole of about 5 to about 35 mm, and the thickness preferably is between 0.3 and 3.0 mm and especially preferably between 0.5 and 1.5 mm. The substrate preferably comprises polymeric materials such as, for example, acrylic resins, polycarbonates, epoxy resins, cyclic olefin copolymers and polyolefins. Especially preferred are hard plastics such as polymethylmethacrylates, polycarbonates or thermally stable polyester cocarbonates.

The substrate may comprise on one or both, respectively, of its major surfaces a structure comprising concave portions (or grooves) and convex portions (or lands) which are usually collectively referred to as pits. Typical dimensions of pits including a relation between the wavelength of the light, the refractive index of the light-transmissive cover film and the depth of a groove in order to minimize optical crosstalk between consecutive lands and grooves are disclosed, for example, in EP 0 874 362 or EP 0 867 873 which are incorporated herein by reference. The track pitch which is the distance between the centreline of adjacent physical tracks as measured in radial direction, typically is 0.64 µm or less, and more preferably 0.32 µm or less.

The structure of pits can be moulded into one or both, respectively, surfaces of the base member or members. This process, which is described in detail in EP 0 729 141, page 4, lines 14 - 46, usually comprises a master disc-forming step (as schematically shown in Fig. 4A - 4G of EP 0 729 141) and an injection moulding step (as schematically shown in Fig. 5A - 5B of EP 0 729 141); EP 0729 141 is incorporated herein by reference. It is also possible, however, that a structure of pits is obtained in the light-transmissive cover film by passing the light-transmissive cover film which is heated to a temperature above its glass transition temperature between two rollers at least one of them exhibiting a patterned structure. This technique is shown schematically in Fig. 10 of EP 0 867 873 where the light-transmissive cover film is passed between a roll and a stamper. The light-transmissive cover film thus obtained can be bonded to the base member or to one or more other light-transmissive cover films optionally bearing a structure of pits, by means of an adhesive layer so that optical storage media having a multiplicity of information storage layers can be obtained.

The construction of the information storage layer 3 depends on whether it is to allow for read out and/or recording.

If the optical storing layer is of ROM type, the information storage layer 3 may comprise the structure of pits bearing a reflective film of Al, Au or the like with a thickness of typically between 20 and 60 nm which can be obtained, for example, by sputtering.

Recordable optical storage media may be of phase-change type or magneto-optical type. According to EP 0 867 873 phase-change type information storage layers may be obtained by successively forming on the structure of pits a reflective film such as an Al film, a GeSbTe film and an ZnS-SiO2 film. More complex phase-change type information storage layers are described, for example, in EP 0 874 362. Magneto-optical type information storage layers 3 comprise, for example, the structure of pits bearing a reflective film such as an Al film, a SiN film, a TbFeCo film and a SiN film in this order.

Information storage layers of write-once type can be obtained, for example, by applying a thin reflective film of Al, Au or other metals to the structure of pits which is then coated with a cyanin or phthalocyanine system organic pigment film.

The information storage layers described above are given by way of example only. The optical storage media according to the present invention can comprise other and/or modified constructions of information storage layers.

The cover film is bonded to the base member by a light-transmissive adhesive layer. In EP 1 047 055 it is disclosed that optical storage media with a low thickness variation, advantageous optical properties and low jitter values can be obtained by bonding such media with one or more light-transmissive adhesive layers. Optical storage media such as DVRs may also be bonded by applying a liquid curable precursor of the light-transmissive adhesive with subsequent curing as described in EP 00 123 083. The use of adhesive layers or films is, however, preferred.

In the specific embodiment of the optical storage medium schematically shown in Fig.1a the adhesive layer 4 bonds the light-transmissive cover film 5 to the information storage layer 3. In more complicated constructions comprising a multiplicity of information storage layers as was described above, adhesive layers 4 can also be used to bond two or more light-transmissive cover films 5 optionally comprising an information storage layer 3, to each other.

Another optical storage medium of the present invention comprises two or more information storage layers. In the specific embodiment of the optical storage medium schematically shown in Fig. 1b the adhesive layer 4 bonds a base member 1 bearing a first information storage layer 3a to a second information storage layer 3b on an light-transmissive cover film 5 onto which the light beam 6 is incident upon.

The adhesive layer is required to be optically transparent or light-transmissive at the wavelength of the incident light beam 6 with which the information is read out from and/or recorded into the optical storage medium. Suitable light sources to generate light beam 6 comprise lasers having, for example, emission lines in the wavelength range of between 400 - 700 nm and preferably of between 600 - 660 nm for red lasers and 400 - 420 nm for blue lasers. It is also possible to use polychromatic light sources with appropriate monochromatic filters such as interference filters. The optical transparency or light-transmission of the adhesive used in the adhesive layer 4 at the wavelength of the incident light which can be measured, for example, according to ASTM D 1746, preferably is at least 80 % and more preferably at least 85 %.

In case one or more adhesive layers are used in the optical storage media of the present invention, such adhesive layers may comprise a transparent backing and/or carrier layer such as, for example, optionally surface-treated, amorphous polymer layers such as polyethylene terephthalate (PET), polycarbonate or polymethylmethacrylate (PMMA) layers carrying on each side an adhesive layer, but preferably it is a transfer film comprising no backing and/or carrier layer. In case of a transfer film, the adhesive layer preferably has an average thickness of between 5 - 100 μm, more preferably, of between 10 - 80 μm, and especially preferably of between 15 - 50 μm, whereas double-sided adhesive tapes comprising a backing and/or carrier layer, may have a thickness of between 30 μm and 100 μm, and more preferably of between 40 μm and 80 μm.

The optical transparency requirements are generally fulfilled by acrylate-based adhesives, but silicone-based adhesives, rubber resin-based adhesives, block copolymer-based adhesives, especially those comprising hydrogenated elastomers, or vinylether polymer-based adhesives can also be used. Any of these materials may be compounded with plasticizers and/or tackifiers to tailor their properties. Acrylate-based adhesives are preferred.

Acrylate-based adhesives which are useful in the present invention can be obtained by polymerization of precursors comprising one or more alkyl acrylates the alkyl groups of which have an average of 4 - 14 atoms. The term "average of 4 - 14 atoms" means that the average number of carbon (C) atoms of the alkyl acrylate compounds is between 4 - 14 and, in particular, between 4 - 12 C atoms. Useful alkyl acrylates (i.e., acrylic acid alkyl ester monomers) include linear or branched monofunctional unsaturated acrylates or methacrylates of non-tertiary alkyl alcohols, the alkyl groups of which have from 4 to 14 and, in particular, from 4 to 12 carbon atoms. Examples of these lower alkyl acrylates used in the invention include but are not limited to, n-butyl acrylate, isobutyl acrylate, hexyl acrylate, 2-ethylhexyl acrylate, isooctyl acrylate, n-octyl acrylate, n-octyl methacrylate, 2-methylbutyl acrylate, isononyl acrylate, n-nonyl acrylate, isoamylacrylate, n-decyl acrylate, isodecyl acrylate, isodecyl methacrylate, isobornyl acrylate, 4-methyl-2-pentyl acrylate and dodecyl acrylate. Preferred lower acrylate and methacrylate esters include isooctyl acrylate, n-butyl acrylate, 2ethylhexyl acrylate, isononyl acrylate and dodecyl acrylate. The polymerizable precursor of the adhesive preferably contains up to 5 and, in particular, 1 - 4 alkyl acrylates. The average number of carbon atoms in the alkyl groups of the alkyl acrylates as defined above, preferably is between 4 - 12 and very particularly between 5 - 10. Blends of different alkyl acrylates may also be used.

If polymerizable precursors of the adhesive are employed they can furthermore contain alkyl esters of unsaturated aliphatic carboxylic acids other than acrylic acid such as, for example, alkyl maleates and alkyl fumarates (based, respectively, on maleic and fumaric acid). In this regard, dibutyl maleate, dioctyl maleate, dibutyl fumarate and dioctyl fumarate are preferred. The amount of ester compounds of unsaturated aliphatic carboxylic acids other than acrylic acid preferably is not too high and preferably does not exceed 25 wt.-% with respect to the mass of the alkyl acrylate component.

The polymerizable precursor of the adhesive can furthermore contain one or more moderately polar and/or strongly polar monomers. Polarity (i.e., hydrogen-bonding ability) is frequently described by the use of terms such as 'strongly', 'moderately', and 'poorly'. References describing these and other solubility terms include 'Solvents', Paint Testing Manual, 3rd ed., G.G. Seward, Ed., American Society for Testing and Materials, Philadelphia, Pennsylvania, and 'A Three-Dimensional Approach to Solubility', Journal of Paint Technology, Vol. 38, No. 496, pp. 269 - 280. Examples for strongly polar monomers are acrylic acid, methacrylic acid and acrylamides while N-vinyl lactams, such as, for example, N-vinyl pyrrolidone and N-vinyl caprolactam, acrylonitrile and dimethyl amino-propyl methacrylate are typical examples of moderately polar monomers. Examples for poorly polar monomers include, for example, iso-bornyl acrylate, vinyl acetate, N-octyl acrylamide, t-butyl acrylate, methyl acrylate, methylmethacrylate or styrene. It was found, however, that when the inner surface of at least one of the members comprises a corrosive layer such as, for example, an Al reflective layer, the percentage of strongly polar monomers is preferably less than about 10 % by weight and, more preferably, less than about 5 % by weight with respect to the mass of the acrylate monomers. The adhesive should preferably be essentially free of acrylic acid in order to avoid severe damaging of the inner surface of the members by corrosion.

Acrylate-based adhesives which are useful in the present invention are described, for example, in US-A-4,181,752, US-A-4,418,120, WO 95/13331 or in Handbook of Adhesive Technology; D. Satas ed.; Second Edition, New York 1989, pp. 396-491. These references are incorporated herein by reference.

The adhesive layers useful in the present invention may comprise further components such as, for example, polymer additives, thickening agents, tackifiers, chain transfer agents and other additives provided that they do not reduce the transparency of the adhesive or adversely affect the uniformity of the thickness of the adhesive layer to an undesirable and/or unacceptable degree. The amount of such additive preferably is not more than 5 wt.-% and more preferably between 0 - 2 wt.-% with respect to the mass of the adhesive.

Adhesives which are useful in the present invention preferably exhibit a storage modulus G' (measured at a temperature of 23° C and a frequency of 1 radian/second) of between $5x10^5$ to $2x10^6$ dyne/$cm^2$, more preferably of between $6x10^5$ to $1.5x10^6$ dyne/$cm^2$ and especially preferably of between $6.5x10^5$ to $9.5x10^5$ dyne/$cm^2$. Most preferably the adhesives employed are pressure-sensitive adhesives.

The adhesive layer or film can be prepared by coating the adhesive layer as an organic or aqueous solution or dispersion onto a release liner with subsequent evaporation of the solvent and optional curing, or as an essentially solvent-free, prepolymerized syrup with subsequent curing. The latter method is described in some detail, for example, in US-A-4,181,752 whereas coating of a solution or dispersion of the adhesive is described, for example, in Handbook of Adhesive Technology; D. Satas ed.; Second Edition, New York 1989, pp. 767- 868 (incorporated herein by reference). The exposed surface of the adhesive layer is usually protected with a second release liner prior to or after curing.

It was found by the present inventors that the thickness of the adhesive layer has to be carefully controlled in order to allow for the preparation of very uniform optical recording media. It was found that the variation of the thickness of the optical recording medium introduced by the adhesive layer, preferably is not more than about ± 3 μm and more preferably not more than about ± 2 μm as measured across an arbitrarily selected cross-section of the optical recording medium over its entire extension using the method of measurement described in the test section below.

A preferred method of preparing very flat, uniform precision caliper adhesive layers which fulfill these requirements, are described, for example, in WO 95/29766, incorporated herein by reference. The method comprises coating of an essentially solvent-free, polymerizable, syrupy precursor of the adhesive through a die onto the surface of a substrate as the substrate moves relative to the die. The die includes a channel adapted to receive the precursor of the adhesive and an adjustable width slot in communication with said channel through which the precursor is passed.

The slot is formed between a substantially straight, sharp edge located on the downstream side of the substrate and a land located on the upstream side of the substrate. The die coating method and the precision coating die are described in more detail in WO 95/29764 and WO 95/29765 (incorporated herein by reference). This method can be used, for example, to coat essentially solvent-free, prepolymerized, syrupy precursors of acrylate-based adhesives onto a moving belt or a release liner with subsequent curing of the adhesive layer. The adhesive layer or film may be directly transferred after curing from the moving belt onto the inner surface of the first member of the optical recording medium, or it may be temporarily stored between release liners prior to application to the inner surface of the first member. When using a moving belt or a release liner with an essentially flat and smooth surface with a surface roughness $R_z$ as defined below of less than 2 μm, very homogenous adhesive layers with a thickness tolerance of ± 3 μm or less, preferably of about ± 2 μm or less can be obtained. These adhesive layers can be used for the preparation of

very uniform optical recording media, and the thickness tolerance introduced by the adhesive layer into the optical recording medium is typically ± 3 µm or less.

The refractive index of the adhesive layer preferably is adapted to the average refractive index of the light-transmissive cover film. The difference between the average refractive index of the light-transmissive cover film and the refractive index of the adhesive layer preferably is not more than 0.05 and more preferably less than 0.02. The refractive index of the adhesive at the wavelength of the impinging light beam 6 (or the average refractive index of the adhesive in the wavelength spectrum of the impinging light beam 6, respectively), which can be measured, for example, according to ASTM D 542, preferably is at least 1.45 and more preferably at least 1.49. It was found by the present inventors that acrylate-based adhesive layers with a refractive index of at least about 1.50 which are useful in the present invention, can be obtained by including a sufficient amount of, for example, phenoxy ethyl acrylate into the polymerizable precursor.

In case the optical storage medium of the present invention comprises one or more adhesive layers obtained by applying a liquid curable precursor of the light-transmissive adhesive e. g. onto the information storage layer 3 of the base member 1 with subsequent application of the light-transmissive cover film 5 and curing of the precursor, such precursor of the light-transmissive adhesive is preferably cured by exposing it to irradiation such as ultraviolet light (UV), gamma (γ) or e-beam irradiation, for example. The precursor of the light-transmissive adhesive contains at least one or more irradiation-curable compounds and one or more polymerization initiators.

Suitable irradiation-curable compounds include monomers, oligomers and pre-polymers having a double bond becoming reactive upon irradiation with, for example, an e-beam or UV light. Irradiation-curable compounds comprising at least one acrylic group

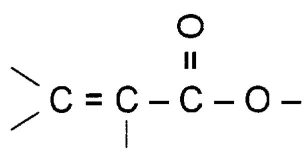

are preferred. Particularly preferred are irradiation-curable compounds comprising at least one (meth)acryloyl group

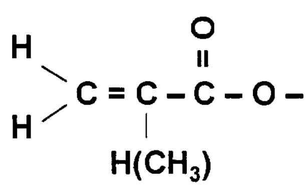

The irradiation-curable compounds suitable in the present invention are especially preferably selected from a group of compounds comprising optionally hydroxyl-, carboxyl- or carboxylate-modified alkyl or alkoxy acrylates, urethane acrylates, epoxy acrylates and acrylamides.

Especially preferred are furthermore irradiation-curable compounds comprising at least one N-vinyl group. Preferred N-vinyl containing irradiation-curable monomers which are suitable in the present invention include, for example, N-vinyl caprolactam, N-vinyl pyrrolidone and N-vinyl imidazole.

The polymerization initiator(s) suitable in the present invention include any conventional polymerization initiators which generate a radical upon UV, y or e-beam irradiation. Exemplary polymerization initiators include benzoin ether-photoinitiators such as benzoin isopropylether and benzoin isobuthylether; benzophenone photoinitiators such as benzophenone, p-methoxybenzophenone, and p-bromobenzo-phenone; acetophenone photoinitiators such as benzylmethylketal, 2,2-diethoxyacetophenone, and 1,1-dichloroacephenone; thioxanthone photoinitiators such as 2-chlorothioxanthone; quinone photoinitiators such as anthoraquinone and phenanthoraquinone; and sulfide photoinitiators such as benzylsulfide, and tetramethylsulfide; and substituted α-ketols such as 2-methyl-2-hydroxypropiophenone. Examples of commercially available photoinitiators include Irgacure 819 and Darocur 1173 (both available from Ciba-Geigy Corp., Hawthorne, NY, USA), Lucern TPO (available from BASF, Parsipanny, NJ, USA) and Irgacure 651, whch is available from Ciba-Geigy Corporation and is believed to be 2,2-dimethoxy-1,2-diphenylethane-1-one. Also useful are copolymeric photoinitiators.

The thickness of the cured light-transmissive adhesive layer is typically from 5 µm to 100 µm, preferably from 0.5 to 20 µm, more preferably from 2 to 10 µm and most preferably from 2 to 8 µm. The variation of the thickness of

the optical storage medium introduced by cured adhesive layer typically is not more than about ± 2 µm and more preferably not more than about ± 1 µm.

Further details on adhesive layers obtained by applying a liquid curable precursor of the light-transmissive adhesive layer can be taken from EP 00 123 083.

The optical storage media of the present invention comprise one or more light-transmissive cover films which each optionally exhibit on one or both of their major surfaces a structure of pits. It is disclosed in European patent application EP 1 047 055 that optical storage media with a reproducibly high transmittance in particular with respect to linearly polarized light can be obtained. Preferably the storage media of the present invention have one or more light-transmissive cover films being essentially optically isotropic and preferably having a vertical birefringence of less than 0.001, more preferably of less than 8 x $10^{-4}$ and most preferably of less than 6.5 x $10^{-4}$ at a temperature of 20 °C and at least at the wavelength or wavelength spectrum, respectively, of the light beam 6 used for recording and/or reading out information.

For a given sheet of a polymeric film having a plane extending in x- and y-directions and a thickness d in the z-direction, the vertical birefringence is the difference between the refractive index perpendicular to the plane of the film, e.g. in the z-direction, and the average of the refractive indices in the two principal directions parallel to the plane of the film, e. g., the plane containing the x- and y-directions. The vertical birefringence is measured applying the method of measurement as described below, at a temperature of 20 °C preferably using a laser light source which can also be used for recording and/or reading out, respectively, information into and from, respectively, the optical storage media. Laser light sources which can be used include, for example, those having emission lines in the wavelength range of between 400 - 700 nm. It is also possible to use polychromatic light sources using a monochromatic filter.

It was surprisingly found by the present inventors that optical storage media having improved storage stability can be obtained by using a cover film which has a small tendency to shrink. In the prior art optical storage media the cover films tended to slowly shrink with time. This shrinkage induces warpage in the optical storage media and thus leads to errors in the reading and recording of data which can even result in a total loss of the data stored on the optical storage medium. Therefore, the optical storage media according to the invention possess a difference between the maximum radial deviation of the optical storage medium before and after being subjected to a temperature of 80 °C for 6 days of 0.4 ° or less, more preferably 0.2 ° or less. Preferably the difference between the maximum radial deviation of the optical storage medium before and after being subjected to a temperature of 80 °C for 11 days is 0.4 ° or less, more preferably 0.2 ° or less. The difference in minimum radial deviation of the optical storage medium before and after being subjected to a temperature of 80 °C for 6 days is preferably 0.4 ° or less, most preferably the difference in minimum radial deviation is 0.4 ° or less. The maximum radial deviation is a measure of the flatness of the surface of the optical storage medium and is determined as described below in the Example section. Such cover films can be obtained by solvent-casting, polymerization casting or extrusion. Preferably the light-transmissive cover films which are useful in the present invention exhibit a low vertical birefringence of less than 0.001 at a temperature of 20 °C at least at the wavelength or wavelength spectrum, respectively, of the impinging light beam.

Solvent-casting

Preparation of the light-transmissive cover films by solvent-casting includes dissolving of the polymer in a solvent, casting of the solution onto a smooth substrate or microstructured surface, respectively, in case an information storage layer is to be included into the light-transmissive cover film, and solidifying the polymer by evaporization of the solvent. Preferred polymers include, for example, polycarbonate, cellulose triacetate and polyolefin-based polymers such as polydicyclopentadiene or a norbornene/dicyclopentadiene/methyl methacrylate terpolymer. Suitable solvents include, for example dichloromethane, dioxolane, cyclohexanone, tetrahydrofuran, dioxane and combinations thereof.

It was found that the preparation of very flat, uniform precision caliper light-transmissive cover films can preferably be conducted by using the die coating method and the precision coating die described in WO 95/29764 and WO 95/29765. This method can be used, for example, to coat partially prepolymerized, syrupy precursors of the polymer of the light-transmissive cover film or solutions of such polymer, respectively, onto a moving belt or drum or a release liner with subsequent drying of the solution and if applicable curing of the precursor. The light-transmissive cover film thus obtained may be directly transferred after curing or drying, respectively, from the moving belt onto the exposed adhesive layer. When using a moving belt or a release liner with an essentially flat and smooth surface with a surface roughness $R_Z$ as defined below of less than 2 µm, very homogenous light-transmissive cover films with a thickness tolerance of about ± 3 µm or less, preferably of about ± 2 µm or less can be obtained. Suitable belts or drums, respectively, with the required smooth surfaces comprise, for example, highly polished stainless steel surfaces.

It was found by the present inventors that the solvent casting technique provides light-transmissive cover films which are essentially optically isotropic and preferably exhibit, in particular, a low value of vertical birefringence which meets the requirements of the present claims. The vertical birefringence may vary to some degree between different casting runs but it was found by the present inventors that it is possible to obtain light-transmissive cover films

with a vertical birefringence of less than 0.001 at 20 °C at least at the wavelength or wavelength spectrum, respectively, of the incident light beam 6, with a limited number of runs and without undue experimentation.

It was further found by the present inventors that the amount of warpage induced in prior art optical storage media prepared by solvent-casting could be significantly decreased by reducing the amount of volatiles (e.g. residual solvent and/or monomers and/or outgassable low-molecular weight ingredients) present in the employed cover films. These volatiles tend to slowly evaporate during storage under ambient conditions and lead to shrinking of the cover film which will distort the base member of the optical storage media. At higher temperatures, which often are e.g. encountered in automobiles in the summer time, the evaporation of the volatiles occurs more rapidly. Commercially available solvent-cast cover films generally have an amount of residual solvent of at least 0.5 wt.-% to 1 wt.-%. In a preferred embodiment the volatiles are understood to have a molecular weight of no more than 200 g/mol, more preferably no more than 100 g/mol.

Generally, the casting process is conducted in two steps: First a solution of the polymer or of a prepolymerisate, is cast onto a smooth surface and dried. Then the predried cover film is further dried in a second drying step. The preparation of the cover film is conducted so that any stress introduced into the solvent-casted film is minimized. Preferably the light-transmissive cover film is removed from the substrate where it has been solvent-casted upon, with a residual content of volatiles (in particular of solvent) of, for example, 10-25 wt.-% and more preferably of 12.5-17.5 wt.-%. The light-transmissive cover film is then further dried as a free-standing, unsupported film by passing it, for example, through a forced air oven. In this second drying step the amount of volatiles such as residual solvent and/or monomers and/or outgassable low-molecular weight ingredients should be less than 0.5 wt.-% based on the total weight of the cover film. Preferably the amount of volatiles is less than 0.3 wt.-%, most preferably less than 0.1 wt.-%.

The exact conditions of the second drying step depend on the polymer and the solvent chosen and can easily be determined by experimentation as described in the Example section of the present invention. Heretofor it was considered sufficient to dry the cover film in the second drying step at a temperature which is 40 to 50 °C higher than the boiling point of the solvent. For example, it was recommended to heat polycarbonate films cast from a methylene chloride solution (boiling point: 40 °C) for a few minutes at a temperature of 80 to 100 °C. However, it has been found that these conditions are not always sufficient to achieve the desired amount of residual solvent. Preferably the temperature employed during the second drying step is at least 60 °C higher than the boiling point of the solvent. More preferably the drying temperature is at least 80 °C higher than the boiling point to achieve short drying times. If temperature-sensitive polymers are used for the cover films it may, however, be preferable to dry the cover films for longer periods of time rather than to use a short drying step at a high temperature.

It was furthermore found that the optical isotropic character of the light-transmissive cover film can be increased and, in particular, its vertical birefringence can be decreased by casting a solution of a suitable polymer and/or a polymerizable precursor on a moving belt or a release liner having a low surface energy of preferably less than about 35 dynes/cm as is disclosed in EP 0 380 028. Suitable low surface energy materials comprise, for example, poly(tetrafluoroethylene), poly(vinylidene fluoride), poly(trifluorochloroethylene) and polyethylene with polyethylene, poly(tetrafluoroethylene) and poly(vinylidene fluoride) being especially preferred.

By increasing the thickness of the film the optical isotropic character of the light-transmissive cover film can be increased and, in particular, its vertical birefringence can be decreased film. Therefore, in a specific embodiment of an optical storage medium according to the present invention with a given total thickness of light-transmissive cover film or films and light-transmissive adhesive layer or layers, respectively, the vertical birefringence of the light-transmissive cover film can be decreased by increasing the thickness of the light-transmissive cover film or films while correspondingly decreasing the thickness of the light-transmissive adhesive layer or layers.

It was furthermore found by the present inventors that the optical isotropic character of the light-transmissive cover films can be increased and, in particular, its vertical birefringence can be decreased by decreasing the amount of components in the polymer composition which tend to impart optical anisotropy. It was, for example, found that the optical anisotropic character of polymers, obtained by solvent casting of polymer formulations comprising a polycarbonate polymer and varying amounts of 1,1-bis(4-hydroxyphenyl)-3,3,5-trimethyl cyclohexane (TCM), was decreased with decreasing amounts of TCM.

## Polymerization casting

Preparation of the light-transmissive cover film by polymerization casting is similar to the preparation of the light-transmissive cover film by solvent casting. It differs mainly from the above method in that a coatable, syrupy precursor which typically comprises the solution of a partially polymerized, curable precursor of the polymer in excess monomer or oligomer is employed instead of a solution of the fully polymerized polymer in a solvent. The coatable, syrupy precursor is cast on a smooth substrate with subsequent polymerization to provide the light-transmissive cover film. This technique allows for the formation of homopolymers or copolymers. It is also possible that one or more polymers are blended into the polymerizable precursor in order to adjust its viscosity and/or modify the properties of

the resulting light-transmissive cover film. It is also possible that the polymerizable precursor comprises one or more solvents in order to adjust its viscosity and coatability but the use of solvent-free polymerizable precursors is preferred. The polymerizable precursor preferably comprises at least one acrylic-functional monomer which, when polymerized, displays a glass transition temperature of at least 10 °C, preferably from about 10 °C to about 140 °C, more preferably from about 20 °C to about 110 °C and especially preferably from about 40 °C to about 100 °C, and/or is not friable.

The cover film is preferably dried so that the amount of volatiles such as solvent and/or monomers and/or outgassable low-molecular weight ingredients, etc. is less than 0.5 % by weight based on the total weight of the cover film. Most preferably the amount of volatiles is regulated so as to be less than 0.3 % by weight, or even less than 0.1 % by weight, based on the total weight of the cover film.

The monomer component of the polymerizable precursor of the light-transmissive cover film is preferably selected so that the resulting light-transmissive cover film is non-tacky at room temperature. Tacky light-transmissive cover films may, however, also be useful, for example, if the optical recording medium and, in particular, the DVR according to the present invention is assembled into a cartridge. Monomers which are useful in the present invention include alkyl acrylates the alkyl groups of which have an average of 2 to 24 atoms. The term average of 2 to 24 atoms means that the average number of carbon (C) atoms of the alkyl acrylate compounds is between 4 to 24, preferably between 4 to 12 C atoms and especially preferably between 4 to 10 C atoms. Useful alkyl acrylates (i.e., acrylic acid alkyl ester monomers) include linear or branched monofunctional unsaturated acrylates or methacrylates of non-tertiary alkyl alcohols, the alkyl groups of which have from 2 to 24 and, in particular, from 2 to 20 carbon atoms. Examples of these lower alkyl acrylates useful in the invention include but are not limited to, methyl acrylate, ethyl acrylate, propyl acrylate, n-butyl acrylate, isobutyl acrylate, hexyl acrylate, 2-ethylhexyl acrylate, isooctyl acrylate, n-octyl acrylate, n-octyl methacrylate, 2-methylbutyl acrylate, isononyl acrylate, n-nonyl acrylate, isoamylacrylate, n-decyl acrylate, isodecyl acrylate, isodecyl methacrylate, isobornyl acrylate, 4-methyl-2-pentyl acrylate, dodecyl acrylate, hexadecyl acrylate, octadecyl acrylate and eicosyl acrylate. Preferred lower acrylate and methacrylate esters include isooctyl acrylate, n-butyl acrylate, 2-ethylhexyl acrylate, isononyl acrylate and dodecyl acrylate. The polymerizable precursor of the light-transmissive cover film preferably contains up to 5 and, in particular, 1 to 4 alkyl acrylates. The average number of carbon atoms in the alkyl groups of the alkyl acrylates as defined above, is preferably 2 to 20, more preferably 2 to 12 and most preferably 2 to 6. Blends of different alkyl acrylates may also be used.

The polymerizable precursor of the light-transmissive cover film can furthermore contain alkyl esters of unsaturated aliphatic carboxylic acids other than acrylic acid such as, for example, alkyl maleates and alkyl fumarates (based, respectively, on maleic and fumaric acid; wherein alkyl can refer to $C_{1-12}$). In this regard, dibutyl maleate, dioctyl maleate, dibutyl fumarate and dioctyl fumarate, are preferred. The amount of ester compounds of unsaturated aliphatic carboxylic acids other than acrylic acid should not be too high and preferably does not exceed 25 wt.-% with respect to the mass of the alkyl acrylate component.

The polymerizable precursor of the light-transmissive cover film can furthermore contain one or more moderately polar and/or strongly polar monomers. Polarity (i.e., hydrogen-bonding ability) is frequently described by the use of terms such as 'strongly', 'moderately', and 'poorly'. References describing these and other solubility terms include 'Solvents', Paint Testing Manual, 3rd ed., G.G. Seward, Ed., American Society for Testing and Materials, Philadelphia, Pennsylvania, and 'A Three-Dimensional Approach to Solubility', Journal of Paint Technology, Vol. 38, No. 496, pp. 269- 280. Examples for strongly polar monomers are acrylic acid, methacrylic acid and acrylamides while N-vinyl lactams, such as, for example, N-vinyl pyrrolidone and N-vinyl caprolactam, acrylonitrile and dimethyl amino-propyl methacrylate are typical examples of moderately polar monomers. Examples for poorly polar monomers include, for example, iso-bornyl acrylate, vinyl acetate, N-octyl acrylamide, t-butyl acrylate, methyl acrylate, methylmethacrylate or styrene.

The polymerizable precursor can furthermore include glycerol diacrylate, glycerol triacrylate, ethyleneglycol diacrylate, diethyleneglycol diacrylate, triethyleneglycol dimethacrylate, 1,3-propanediol diacrylate, 1,3-propanediol dimethacrylate, trimethanol triacrylate, 1,2,4-butanetriol trimethylacrylate, 1,4-cyclohexanediol diacrylate, pentaerythritol triacrylate, pentaerythritol tetraacrylate, pentaerythritol tetramethacrylate, sorbitol hexacrylate, bis[1-(2-acryloxy)] p-ethoxyphenyl dimethylmethane, bis[1-(3-acryloxy-2-hydroxy)]-p-propoxyphenyl-dimethylmethane, tris-hydroxyethyl isocyanurate trimethacrylate, bis-acrylates and bis-methacrylates of polyethylene glycols of a molecular weight of 200-500 and acrylated oligomers such as those described in US-A-4,642,126.

The polymerizable precursor of the polymer of the light-transmissive cover film may also include film-forming materials compatible with the monomer component. Such film-forming materials preferably include polymers reactive with the monomer component, e.g., acrylic functional copolyesters, acrylic functional polyurethane-acrylate copolymers, dendrimers or acrylate-functional macromers, and also non-reactive polymers which are preferably selected so that they are soluble both in the polymerizable precursor and in the cured precursor, i.e. in the light-transmissive cover film. Non-reactive polymers which when blended with the precursor of the light-transmissive cover film result in a polymer with a negative $\chi$ ("chi") value are preferred; such non-reactive additives may be selected, for example, from the group of polymers comprising polyalphaolefins, thermoplastic block copolymers, non-reactive acrylic polymers and

polyphenylene ethers.

The degree of prepolymerization of the polymerizable precursor is preferably chosen as to provide an easily coatable precursor having a viscosity of, for example, between 0.3 and 200 Pa·s at room temperature.

The polymerizable precursor of the polymer of the light-transmissive cover film preferably comprises a monomer component selected from the group comprising (methyl)methacrylate, (methyl)ethylacrylate, (methyl)propylacrylate, lower amounts (e.g. upto 25 wt.-% with respect to the mass of the polymer) of (methyl) ($C_{4-8}$ alkyl) acrylates, acrylonitrile, styrene, styrene alkyl acrylates, methacrylamides and alkyl substituted methacrylamides such as N,N-dimethylacrylamide, octylacrylamide, N-vinylpyrrolidone, N-vinylcaprolactam, one or more polymerization initiators and optionally one or more vinyl monomers having one or more unsaturated double bonds copolymerizable with the monomer(s) of the polymerizable precursor.

## Extrusion

Suitable extrudable polymers preferably exhibit a melt flow rate at 300 °C as measured according to ISO 1133 using a weight of 1.2 kg, of between 40 - 200 g/10 min. and more preferably of 50 - 150 g/10 min. Specific examples include, for example, polycarbonates and polyolefin-based polymers such as, for example, polydicyclopentadiene. It is disclosed in WO 00/09591 that polycarbonate molecules having a low molecular weight Mw of between about 15,000 and about 20,000 which are typically recommended for injection applications, can preferably used for preparing polycarbonate films having a low value of in-plane birefringence.

The extrudable polymer is molten and extruded using, in particular, the so-called chill-roll extrusion method which is described in detail in "Handbuch der Kunststoff-Extrusionstechnik, vol. II, Extrusionsanlagen", edited by F. Hensen et al., Hanser-Verlag Munich, 1986, pp. 164 - 171, section 6.5.2.7. "Chill-Roll-Abzugsanlagen", which is incorporated herein by reference. It was surprisingly found by the present inventors that this technique allows for the preparation of polymer films having advantageous values of the vertical birefringence and, in particular, a vertical birefringence of less than 0.001 at a temperature of 20 °C and at least of the wavelength or wavelength spectrum, respectively, of the impinging light beam. It is disclosed in WO 00/09591 that the chill-roll extrusion technique allows for the extrusion of low molecular weight polycarbonate films having low values of in-plane birefringence and improved dimensional stability during storage. The person skilled in the art would have expected, however, disadvantageous values for the vertical birefringence because of the stress introduced into the polycarbonate in z-direction due to the presence of a chilled metal roll on one side of the film and of ambient atmosphere on the other side of the film.

It was found by the present inventors that the dimensional stability during storage of extruded polymer films obtained by the chill-roll method and optionally their vertical birefringence can be decreased can be improved by using chilled rolls on which the polymer is formed, having a large diameter of preferably at least 0.6 m, more preferably of at least 0.8 m and especially preferably of at least 1.0 m. It is assumed by the present inventors who do, however, not wish to be bound by such theory, that the introduction of stress into the z-direction of the extruded polymer film which occurs when releasing such film from the chilled roll or rolls, respectively, can be decreased by using large diameter chill rolls. In an especially preferred method the chill roll or rolls are replaced by one or more chilled belts.

The temperature of the chill roll or rolls preferably are at least 10 °C and more preferably at least 15 °C in order to avoid condensation of ambient moisture. The temperature needs to be carefully controlled with a precision of at least ± 1 °C and more preferably of at least ± 0.5 °C which can and be achieved by cooling the rolls. Details can be found in Hanser et al., loc. cit.

The polymer is preferably extruded free of volatiles such as solvent and/or monomers and/or outgassable low-molecular weight ingredients. In the context of the present invention the term "free of means that less than 0.5 wt.-%, preferably less than 0.3 wt.-% and most preferably less than 0.1 wt.-% of the respective compounds are present. If a solution of the polymer and/or a polymerizable precursor of the polymer is required initially, a vented extruder is preferably used so that the concentration of the solvent and/or the outgassable low-molecular weight ingredients in the polymer at the die of the extruder preferably is less than 0.5 wt.-%, more preferably less than 0.3 wt.-% and most preferably less than 0.1 wt.% with respect to the mass of the polymer. It is assumed by the present inventors that the presence of higher amounts of the volatiles tends to introduce strain and hence optical anisotropy and/or strain into the z-direction of the light transmissive polymeric film which is due to the gradient of the volatiles in the z-direction during their evaporation.

Regardless of the preparation method, the light-transmissive cover film or films, respectively, used in the optical storage media of the present invention preferably furthermore exhibit an in-plane retardation of less than ± 30 nm, more preferably of less than ± 25 nm and especially preferably of less than ± 15 nm at a temperature of 20 °C and the wavelength or wavelength spectrum, respectively, of the light beam used for recording and/or reading out information; these values correspond for a typical value of the light-transmissive cover film of, for example, 75 µm to values of the in-plane birefringence of 0.0004, 0.00033 and 0.0002, respectively. The in-plane retardation is measured applying the method of measurement as described below using DVD tester "Prometheus MT 136" commercially available from Dr. Schenk GmbH, Martinsried, Germany. The in-plane birefringence is obtained from the in-plane retardation value by dividing the latter by the thickness of the light-transmissive cover film.

The light-transmissive cover film preferably is stiff or ductile. As used herein, the term "stiff' means stretch resistant, creep resistant and dimensionally stable. More particularly, the light-transmissive cover film preferably has a tensile modulus at room temperature of more than 1,380 MPa (200 kilopounds per square inch), more preferably of more than 2,070 MPa (300 kpsi) and most preferably of more than 2,760 MPa (400 kpsi).

Tensile modulus of the light-transmissive cover film is determined according to ASTM Test Method D-822-88 using a 10.2 cm (4 inch) gauge length and a separation rate of 5.1 cm/min (2 inches/min).

As used herein, the term "ductile light-transmissive cover film" refers to films having a tensile modulus of less than 1,380 MPa (=200 kpsi) and a tensile elongation at room temperature of greater than 50%, preferably greater than 150%. Tensile modulus and tensile elongation are measured in accordance with ASTM Test Method D-882-88 using a gauge length of 10.2 cm and a separation rate of 12.7 cm/min (5 inches/min). "Tensile elongation" as used herein refers to the elongation at break of the ductile material as measured during the referenced tensile test procedure.

Light-transmissive cover films with the specified values of stiffness or ductility, respectively, are preferred. The tensile test procedures described above are only used, however, to check the mechanical properties of test samples of the light-transmissive cover film. Such test samples are not used in the optical storage media of the present invention. The light-transmissive cover film to be used in the optical storage media of the present invention has to be handled as stress-free as possible in order not to impart optical anisotropy to such film. Therefore, the light-transmissive cover film useful in the present invention should not be subjected to stretching.

The thickness of the light-transmissive cover film or films, respectively, preferably is between 10 and 200 μm, more preferably between 20 and 150 μm and especially preferably between 40 and 120 μm. In more complicated constructions of the optical storage medium of the present invention comprising two or more light-transmissive cover films, the thickness of each cover layer preferably is between 5 and 100 μm and more preferably between 10 and 90 μm.

The maximum thickness of the sum of the thicknesses of the light-transmissive cover film or films and the adhesive layer or layers of the optical storage media of the present invention can be estimated according to EP 0 867 873 and JP 3-225 650 by using a relationship established in JP 3-225 650 for CDs, between such maximum thickness, the numerical aperture of the optical head device of the optical disc recording and/or reproducing apparatus, the wavelength of the light source utilized and the skew margin. When using a laser light source with a wavelength of approximately 0.65 μm, EP 0 867 873 suggests for the sum of the thicknesses of the light-transmissive cover film or films and the adhesive layer or layers a value of 288 μm or less whereas for a blue light laser with a wavelength of 0.4 μm a value of 177 μm or less is disclosed.

In preparing the light-transmissive cover film(s), the thickness of the cast layer is preferably carefully controlled in order to allow for the preparation of very uniform light-transmissive cover films. It was found that the variation of the thickness of the light-transmissive cover film preferably is not more than ± 3 μm and more preferably not more than ± 2 μm as measured across an arbitrarily selected cross-section of the optical recording medium over its entire extension using the method of measurement described in the test section below.

It was found that the preparation of very flat, uniform precision caliper light-transmissive cover films can preferably be performed by using the die disclosed in WO 95/29764 and WO 95/29765 cited above for use in precision die coating applications, in chill-roll extruding of low molecular weight polycarbonates having a molecular weight Mw of, for example, from about 15,000 to about 20,000. Such polycarbonates exhibit a relatively high melt flow rate at 300 °C as measured according to ISO 1133 using a weight of 1.2 kg, of about 80 g/10 min. so that the above precision die can be used.

It was furthermore found by the present inventors that the speed of the chill roll or rolls, respectively, need to be carefully controlled in order to minimize thickness variations in the down-web direction. Thickness variation in cross direction can be reduced by in-process scanning of the thickness of the extruded film in cross direction by adjusting gauge variations of the die in cross direction based on such data.

For optical storage media according to the present invention a low value of the vertical birefringence is preferable because of the large value of the numerical aperture of the focussed impinging light beam 6. The optical storage media of the present invention furthermore preferably exhibit a low value of in-plane retardation or of the in-plane birefringence, respectively. Light-transmissive cover films preferably exhibit a value of the in-plane retardation of less than ± 30 nm and, more preferably of less than ± 25 nm and especially preferably of less than ± 15 nm at 20 °C at least at the wavelength or the wavelength spectrum, respectively, of the incident light beam 6; these values correspond for a typical value of the light-transmissive cover film of, for example, 75 μm to values of the in-plane birefringence of 0.0004, 0.00033 and 0.0002, respectively.

Based on these findings, light-transmissive cover films which are essentially optically isotropic and preferably exhibit a value of the vertical birefringence of less than 0.001 and optionally a value of the in-plane birefringence of less than ± 30 nm in each case at 20°C and at least at the wavelength or wavelength spectrum, respectively, of the incident light beam 6, can reproducibly be obtained. Extruded light-transmissive polymer films with the preferable low

values of vertical birefringence and, optionally, in-plane retardation are also available commercially as can be taken from the Example section below.

It was found that it is desirable to laminate a releasable protective film to at least one major surface of the light-transmissive cover film in order to protect the surface of the light-transmissive cover film during handling and mounting of the optical recording media.

A wide variety of polymer films optionally bearing a pressure-sensitive adhesive layer can be used as releasable protective film. Useful polymer films which can be used in conjunction with a pressure-sensitive adhesive layer comprise, for example, polyolefin films including homopolymers such as polyethylene or polypropylene films, copolymers such as ethylene/propylene copolymers and mixtures of homopolymers or copolymers such as mixtures of polyethylene and polypropylene, polyethylene terephthalate films or polyurethane films like, for example, extendable elastomeric polyurethanes of the polyetherurethane or polyesterurethane type. It is also possible to use laminates of at least two polymer films the lower exposed film of which being bonded to the light-transmissive cover film 5, exhibiting self-adhering properties. Suitable examples of polymers with self-adhering properties included EVA films (polyethylenevinylacetate) having a high vinyl acetate content of, for example about 5 - 20 wt.-% with respect to the mass of the EVA polymer. Such laminates can be used as releasable protective films without a pressure-sensitive adhesive layer.

The pressure-sensitive adhesive if present is preferably selected so that it can be easily removed from the light-transmissive cover film without leaving behind any residual adhesive. The pressure-sensitive adhesive is preferably selected so that the 90° peel adhesion from a polycarbonate substrate as measured according to PSTC method PSTC-3 is not more than 1 N/2.54 cm, preferably not more than 75 cN/2.54 cm and especially preferably less than 50 cN/2.54 cm. Suitable acrylate based removable adhesives which exhibit a low peel adhesion strength and a high cohesive strength which are useful for the preparation of releasable protective films are described, for example, in US-A-4,166,152 incorporated herein by reference. Releasable protective films which are useful in the present invention are available as protective tape products from 3M; a suitable example is 3M Protective Tape # 2104.

The optical storage media of the present invention are prepared by providing at least one base member; at least one light-transmissive cover film and at least one light-transmissive adhesive layer and assembling these to give the above-described optical storage media.

In a first preferred method of preparing an optical recording medium according to Fig. 1a, a first laminate comprising a releasable protective film 7 and a light-transmissive cover film 5 is laminated to a second laminate comprising a pressure-sensitive adhesive layer 4 and a smooth release liner 8, between two rolls 50, 51 as is schematically shown in Fig. 2. The rolls exhibit a very smooth surface and are arranged to allow for an essentially stress-free and bubble-free lamination of the films.

The resulting laminate is fed into a bonding station schematically shown in Fig. 3 which is operated in a quasi-continuous mode. The release liner 8 is separated from the resulting laminate, for example, by means of a dispensing edge or roll 52 and then attached to a vacuum plate holder 53 by air suction. Using appropriate die-cut equipment (not shown) the die-cut laminate schematically shown in Fig. 4 exhibiting the center hole 10 and the outer circumference 11 corresponding to the dimensions of the disc-shaped base member 1, is obtained. The vacuum plate holder 53 with the attached die-cut laminate is then transferred to a vacuum bonding apparatus 60 schematically shown in Fig. 5. The vacuum bonding apparatus comprises an upper vacuum chamber 56 and a bottom pressure chamber 58 which are separated by the movable bottom plate 59 and the flexible seal 61. The upper chamber 56 can be evacuated by means of pump 55, and the bottom chamber 58 can be evacuated or pressurized, respectively, by means of pump 57. The vacuum plate holder 53 is attached to the bottom plate 59 of the vacuum bonding apparatus 60 with the exposed adhesive layer 4 of the attached die-cut laminate facing up. The base member 1 bearing the information storage layer 3 is attached to the top plate 54 of the vacuum bonding apparatus 60 with the information storage layer 3 facing down. The bottom chamber 58 is evacuated in order to keep the bottom plate 59 in a lower position during the following evacuation of the main chamber 56. The main chamber 56 of the vacuum bonding apparatus 60 is then evacuated via pump 55.The pressure in the bottom chamber 58 is then increased to a certain level via pump 57 thereby pushing the die-cut laminate against the base member 1. Then the bottom plate 59 is driven to the lower position by evacuating the bottom pressure chamber 58. After pressurizing the main chamber 56 of the vacuum bonding apparatus 60 to atmospheric pressure, the optical storage medium according to Fig. 1a of the present invention can be removed from the vacuum bonding apparatus 60. The releasable protective film 7 is removed to give a specific embodiment of an optical storage medium according to the present invention according to Fig. 1a.

In an alternative method of preparing an optical recording medium according to Fig. 1a, the pressure-sensitive adhesive layer 4 is laminated to the information storage layer 3 formed on the pits exhibiting surface 2 of the base member 1. The pressure-sensitive adhesive layer can be supplied, for example, as die-cut having the shape of the base member. The pressure-sensitive adhesive layer is preferably attached near one edge of the base member and then progressively laminated across the surface of the base member, applying a lamination angle of, for example, 45° or less in order to avoid entrapment of air bubbles. The release liner is removed from the pressure-sensitive adhesive layer and the base member bearing the pressure-sensitive adhesive layer with the pressure-sensitive adhesive layer

facing down can be attached to the top plate 54 of the vacuum bonding apparatus 60 of Fig. 5. A laminate comprising a releasable protective film and a light-transmissive cover film with the light-transmissive cover film facing up is applied to the bottom plate 59. The optical recording medium is then prepared by using the vacuum bonding process as was described above.

In another method of preparing an optical recording medium according to Fig. 1a, a laminate comprising a releasable protective film 8, a light-transmissive cover film 5 and an exposed pressure-sensitive adhesive layer 4 is bonded to the exposed surface of the information storage layer 3 of the disc-shaped base member 1 by means of a wheel-bonding device disclosed in WO 99/54116 (incorporated herein by reference). The wheel-bonding process ensures a bonding almost free of air inclusions as well as a good flatness of the laminated optical storage media.

In a further preferred method a disc-shaped member 1 having an outer circumference and a center hole (not shown in Fig. 1a) and bearing an information storage layer 3, is provided. The base member 1 is applied through its center hole to a rotatable support having a holding pin securing said base member to the rotatable support. Then a liquid curable precursor of the light-transmissive adhesive film is dosed onto the information storage layer 3 of the base member. Since the adhesive will be distributed at a later step in the assembly procedure by rotating the base member, i.e. by the application of centrifugal forces, it was found to be advantageous to dose the liquid curable precursor to the information storage layer 3 of the base member close to the circumference of the center hole. It is preferred to apply the liquid precursor in the form of a ring around the circumference of the center hole. The precursor of the liquid adhesive can also be applied, for example, as a single dot or in other geometries and/or in larger distances from the circumference of the center hole but it was found that the homogenity of the thickness of the layer of the curable liquid precursor can be increased when applying such precursor in the form of a ring relatively close to the outer circumference of the center hole.

In the next step, a die-cut of the light-transmissive cover film 5 exhibiting an outer circumference and a center hole having dimensions corresponding to those of the base member 1, is prepared and placed onto the information storage layer 3 of the base member 1. The die-cut of the light-transmissive cover film is secured through its center hole to the holding pin of the rotatable support.

In the next step, the disc member 1 and the light-transmissive cover film 5 attached to it are rotated to spin out the curable liquid precursor of the light-transmissive adhesive between the storage layer 3 and the cover film 5. The variation of the thickness of the layer of the liquid curable precursor can be optimized, in particular, by selecting an appropriate maximum rotation frequency of the rotatable support and also by varying the rotation time and the rotation speed-time profile applied to ramped up the rotation frequency to and down from, respectively, its maximum value. The person skilled in the art can easily determine appropriate parameters for a given disc construction and geometry without undue experimentation. The maximum rotation frequency typically is between 500 and 5,000 rpm.

In the next step, the liquid curable precursor of the light-transmissve adhesive is irradiated preferably through the light-transmissive cover film 5 in order to effect curing. Curing by UV-irradiation is preferred using UV lamps generating light in the wavelength range from about 250 nm to about 450 nm, more preferably from about 300 nm to about 400 nm.

In a final step, the holding pin of the rotatable support is retracted to release the assembled optical storage medium.

In the above method of preparing an optical storage medium it is not required to apply the light-transmissive cover film 5 under vacuum because any air bubbles formed in the layer of the curable liquid precursor of the light-transmissive adhesive are expelled during the subsequent spinning step. The variation of the thickness of the optical storage medium introduced by each light-transmissive adhesive layer 4 obtained by applying a liquid curable precursor of said adhesive with subsequent curing is typically not more than about $\underline{+}2$ μm and more preferably not more than about ± 1 μm as measured across an arbitrarily selected cross-section of the optical storage medium over its entire extension. The thickness of the cured light-transmissive adhesive layer obtained by applying a liquid curable precursor of said adhesive with subsequent curing, is typically from 0.5 - 20 μm, more preferably from 2 - 10 μm and especially preferably from 2 - 8 μm.

In an alternative method of preparing an optical storage medium according to Fig. 1a, the curable liquid precursor of the light-transmissive adhesive 4 is applied to the information storage layer 3 of the base member 1 by spin coating, knife coating or spray-coating and cured by, e. g., UV irradiation before the die-cut of the light-transmissive cover film 5 is applied. In this case, the curable liquid precursor of the light-transmissive adhesive 4 is preferably selected so that the cured adhesive is a pressure-sensitive adhesive in order to ensure a sufficient bonding between the light-transmissive cover film 5 and the information storage layer 3 of the base member. This method requires, however, that the light-transmissive cover film 5 is applied to the base member under vacuum in order to avoid incorporation of air bubbles. In case of a cured adhesive layer with pressure-sensitive adhesive properties it is also preferred to apply the light-transmissive adhesive layer 4 as a separately prepared layer or film as is disclosed in co-pending European patent application EP 1 047 055.

The methods as described above are only exemplary and by no means restrict the scope of the present

invention.

Test methods

*Maximum and minimum radial deviation*

The minimum and maximum radial deviation of a laser beam were measured using a Dr. Schenk DVD BIREF 126-S tester (Dr Schenk GmbH, Martinsried, Germany). The radial deviation is the angle between the laser beam impinging the surface of the disk in an angle of 90° and the reflected beam. The minimum (or maximum) deviation is the lowest (or highest) value obtained after scanning the surface of the disk at radii beween 23 and 58 mm.
When determining the difference in radial deviation the first value of the radial deviation can be measured directly after lamination. The second value can be measured a predetermined time thereafter.

*Shrinkage*

A rectangular piece of polycarbonate having a size of 120 mm x 120 mm was cut out of a polycarbonate film. Marks were put near the corners of the rectangle to indicate a square having a size of 100 mm x 100 mm. The polycarbonate rectangle was then placed between two glass plates in order to keep it flat and the exact distance between the marks was measured in down-web and cross-web direction using a microscope having an accuracy of ± 3 µm. The glass plate on top of the film was then removed and the rectangle was exposed to the aging conditions (e.g. 8 days at 80 °C) in a circulating air oven. After cooling of the sample to room temperature, the top glass plate was again applied onto the polycarbonate and the size of the cover film was determined using the microscope. The percentage of shrinkage was calculated on the basis of two individual shrinkage tests.

*Amount of residual solvent*

The amount of residual solvent in the polycarbonate film was measured by gaschromatic headspace and mass spectroscopic analysis: The samples (0.50 grams) were cut into small pieces, placed into vials and 10ml dimethyl formamide (DMF) solvent were added. The vials were sealed with Teflon™ faced septums and heated for 30 minutes at 80 °C in a Hewlett Packard HP7694 Headspace Sampler. A 30 meter ZB-5 x 0.25mm x 1.0 µm film GC column was used for the analysis. The GC column program was: 40 °C (1 minute hold) to 310 °C (5 minute hold) at 10 °C /min., helium column flow at 1.2ml/min. The separated components passed into the Hewlett Packard HP5972 mass selective detector where they were subjected to electron bombardment at 70 eV. Full scan unit resolution mass spectra from 29 to 500 m/z were detected and recorded.
One set of standards was made up by adding the appropriate amount of methylene chloride to DMF. Another set of standards were made up by dissolving 0:50 grams of polycarbonate and the appropriate amount of methylene chloride in DMF.

*Thickness and flatness measurement*

The thickness and thickness variation of the light-transmissive cover films and PSA layers were measured using a DVD tester commercially available as ETA-DVD 80 from STEAG HamaTech AG, Sternenfeld, Germany. The ETA-DVD tester had a maximum resolution in radial direction of 0.1 mm and in tangential direction of 0.1 mm, the thickness resolution is 0.1 µm within the range of 25 - 120 µm. The ETA-DVD tester consists of a turntable onto which the disc is mounted, a laser/sensor system and the measuring computer unit.
Samples of the light-transmissive cover films to be evaluated were mounted with double-coated adhesive tape over cut-out sections of a CD disc blank which acted as a sample holder. Measurements were made at a radius of 37.5 mm from the disc center. Three hundred (300) values per circle were measured. This reflects the maximum resolution which could be measured using this instrument.
A graph was generated showing thickness in micrometers vs. angle of rotation. The instrument calculates a minimum, a maximum, an average and a variation. These calculated values could not be utilized in a few instances because of periodic interference from the sample holder. In these cases values were taken from the curves manually.
In addition samples of adhesive layers were evaluated as components of completed disc constructions.

*Vertical birefringence of light-transmissive cover film*

Equipment used:

Microscope:

A Leitz Ortholux II Pol microscope purchased from Ernst Leitz Wetzlar GmbH, Wetzlar, Germany (now Leica Mikroskopie und Systeme GmbH, Wetzlar, Germany), was used. This microscope was equipped with a 40X/0.85NA strain free objective and a full-wave compensating plate. The microscope was also equipped with a Bertrand lens for conoscopic viewing.

Polarization Analyzer:

RPA2000 Polarization Analyzer equipped with the RW or rotating waveplate option and a 435 nm interference filter. The instrument is manufactured by Instrument Systems GmbH, Neumarkter Str. 83, 81673 Munich, Germany

Procedure of measurement:

The procedure consists of 3 distinct steps:

(1) determination of the orientation of the minimum and maximum refractive index directions in the plane of the light-transmissive cover film.
(2) measurement of the Mueller matrix for light propagating through the light-transmissive cover film along a path 45° to the plane of light-transmissive cover film.
(3) calculation of the vertical birefringence from the Mueller matrix .

ad (1)

A sample of the light-transmissive cover film is placed on the microscope stage and brought into good focus using the 40X objective. By using conoscopic viewing it is verified that the light-transmissive cover film has three principal refractive indices: two very nearly equal refractive indices which are perpendicular to one another but in the plane of the film and a third refractive index perpendicular to the plane of the film. This can be confirmed by observing that the interference figure remains centered as the stage is rotated. If the interference figure remains well centered then the directions of the principal refractive indices in the plane of the film are determined.

ad (2)

The RPA2000 Polarization Analyzer is set up so that the plane of the rotating table is perpendicular to the light path between the polarization state generator and the polarization state analyzer. The sample of the light-transmissive cover film is placed on a holder that was constructed to ensure that the light beam used to analyze the film passes through the film at 45° to the plane of the light-transmissive cover film. Additionally, the high refractive index direction in the plane of the light-transmissive cover film is oriented to be perpendicular to the light beam. The sample holder is then placed on the rotating table of the RPA2000 Polarization Anaylzer. The Mueller matrix is then measured for the film in this specific orientation. If the non-diagonal elements of the matrix are significantly different from zero then the table is rotated to minimize these terms and the Mueller matrix is re-measured.

ad (3)

The retardation of the light as it travels through the light-transmissive cover film at 45° is calculated based on the equations given in "Polarized light: fundamentals and applications", Edward Collet, M. Dekker, New York 1993, p. 581. Then the path length of the light through the light-transmissive cover film is obtained from the following equation:

$$\text{Path length} = \text{thickness of the film} / (\cos(\arcsin(45 / \text{nominal refractive index})))$$

using the average in-plane refractive index as the nominal refractive index.
The birefringence at 45° is the retardation at 45° divided by the path length. Because the in-plane refractive index is known, the refractive index at 45° can be calculated.

The final calculation uses the equation for the length of a radial line in an ellipse to calculate the refractive index perpendicular to the plane of the film. The long axis of the ellipse is the refractive index in the plane of the film and the length of the radial line at 45° is the refractive index calculated above. This allows the calculation of the unknown short axis of the ellipse or the refractive index perpendicular to the plane of the film.
The vertical birefringence is obtained as the difference between the in-plane refractive index and the refractive index perpendicular to the plane of the light-transmissive cover film.
The values of vertical birefringence were measured at 20 °C and at a wavelength of 435 nm.

In-plane retardation of light-transmissive cover film

*Sample preparation:* samples of the light-transmissive cover films to be evaluated were mounted with double-coated adhesive tape over cut-out sections of a CD disc blank which acted as a sample holder.
Measurements were made on commercial equipment suited to evaluating properties of optical recording media, available from Dr. Schenk GmbH, Martinsried, Germany, as Model "Prometheus MT 136". The measurement mode "relative birefringence" was selected.
A graph was generated giving relative birefringence (T) in nm (Y-axis) vs. measurement angle in degrees (X-axis). The resulting graph showed sections where the instrument was observing the sample holder. These portions were disregarded. The remaining signal appeared in shapes varying from near flat to a sinusoidal wave form.
Two measurements were made in each sample section, as 35 mm and 40 mm radius from the center of the disc, respectively.
The minimum and maximum values from the curve were taken and then averaged. Both the average and the deviation from that average are recorded.
Because the disc rotates, information is generated on the light-transmissive cover film's properties in several directions. One can observe the cross-web and down-web directions of the light-transmissive cover films and the influence on the birefringence.

**EXAMPLES**

**Comparative Example 1**

Annealing of the Compact Disk substrate:

A clear Compact Disk (CD) substrate molded from polycarbonate resin with a thickness of 1.2 mm, an outer diameter of 120 mm and an inner hole diameter of 15 mm was annealed for 19 days in a circulating air oven at 80°C to eliminate the effect of residual stresses incorporated into the disc during the molding process. Residual stresses in the disc blanks were removed by this annealing process and thus any effect they might have on the experiments was eliminated.

Preparation of the cover film:

A cover film was prepared by the following procedure. APEC 9330 (Bayer AG), a polycarbonate polymer comprising 90% by weight bisphenol A and 10% by weight 1,1-bis(4-hydroxyphenyl)-3,3,5-trimethyl cyclohexane (TMC), was dissolved in methylene chloride and cast onto a smooth stainless steel belt and then dried to 15 wt.-% residual solvent. The film was removed from the belt and passed through a forced air oven (ca. 80 - 100° C) until the residual solvent in the film was 0.8 wt.-%. The resulting light-transmissive cover film had a thickness of 75.7 μm. The film thus prepared was obtained from Lofo High Tech Film GmbH, Weil am Rhein, Germany. The film was subsequently stored for three weeks at 23 °C and 0 % relative humidity.
A circle having having an outer diameter of 119.4 mm and an inner hole of 22.8 mm was cut from the polycarbonate film and bonded in vacuum using a pressure-sensitive adhesive film with the corresponding dimensions according to the vacuum bonding process described below. The layer of pressure-sensitive adhesive had a thickness of 25 μm.

Bonding of the cover film to the disk substrate:

The following process was used to bond a base member bearing an information storing layer on its surface and the light-transmissive cover film bearing the releasable protective film as prepared above. The bonding apparatus, schematically shown in Fig. 5, was located in a clean room class 100 environment. Introduction of the DVR components into the apparatus of Fig. 5 and bonding of such components was performed as follows:

1. The bottom chamber 58 is evacuated
2. The base member 1 was attached to the vacuum plate holder of top plate 54 of the bonding apparatus of Fig. 5 and held by vacuum with the information storage layer pointing downwards.
3. The pressure-sensitive adhesive layer 4 (after removal of one release liner) was put on the bottom plate 59 with the remaining release liner facing downwards, and centred.
4. The main vacuum chamber 56 was closed.
5. The main chamber 56 was evacuated until a vacuum of 0.08 mbar was reached.
6. The bottom chamber 58 was ventilated to raise the bottom plate 59 and thus bond the pressure-sensitive adhesive layer 4 to the information storage layer 3 of the base member 1.
7. The bottom chamber 58 was evacuated and the bottom plate 59 was lowered.
8. The main vacuum chamber 56 was ventilated and then opened.
9. The bonded construction (base member 1 / information storage layer 3 / pressure-sensitive adhesive layer 4 / release liner) remained attached to the top plate 54 held by its vacuum plate holder.
10. The release liner was removed from the pressure-sensitive adhesive layer 4.
11. The die-cut laminate of the light-transmissive cover layer 5 and the protective film 7 was put on the bottom plate 59 with the releasable protective film facing downwards, and centered.
12. The main vacuum chamber 56 was closed.
13. The main chamber 56 was evacuated until a vacuum of 0.08 mbar was reached.
14. The bottom chamber 58 was ventilated and the bottom plate thereby raised, and the light-transmissive cover film 5 was adhered to the pressure-sensitive adhesive layer 4, thus forming an optical storage medium.
15. The bottom chamber 58 was evacuated and the bottom plate 59 was thereby lowered.
16. The main vacuum chamber 56 was ventilated.
17. The main chamber 56 was opened.

To evaluate the performance of the finished optical storage medium, the releaseable protective film was removed. The optical storage medium obtained exhibited advantageous optical properties, a low thickness variation, low jitter values and a high transmission with respect to linearly polarized light.

Test Measurements:

The maximum and minimum radial deviation of the resultant optical storage media was measured directly after lamination and after storage under various conditions as indicated in the following tables. The radial deviation was calculated from the average of data from five discs. Maximum radial deviation is shown in Table 1. Minimum radial deviation is shown in Table 2.

## Example 1

A solvent cast polycarbonate film was prepared in the same manner as the film of Comparative Example 1, with the exception that it was stored for 19 days at 80 °C in a circulating air oven rather than for three weeks at 23°C.
A disk was prepared by bonding the film thus prepared to the information storing surface of the disc as described in Comparative Example 1. The disc was then tested directly after lamination and after being stored under a variety of conditions as shown in Tables 1 and 2.

## Example 2

An extruded polycarbonate film having a thickness of approx. 80 µm obtainable from Roehm under the trade designation Europlex PC farblos 99506 was stored for three weeks at 23 °C and 0 % relative humidity.
A disk was prepared by bonding the film thus prepared to the information storing surface of the disc as described in Comparative Example 1. The disc was then tested directly after lamination and after being stored under a variety of conditions as shown in Tables 1 and 2.

## Example 3

The same extruded polycarbonate film as employed in Example 2 was stored for 19 days at 80 °C in a circulating air oven.
A disk was prepared by bonding the film thus prepared to the information storing surface of the disc as described in Comparative Example 1. The disc was then tested directly after lamination and after being stored under a variety of conditions as shown in Tables 1 and 2. The maximum and minimum radial deviations were determined by

the test method cited above.

Table 1

| **maximum radial deviation** | C1 | Ex. 1 | Ex. 2 | Ex. 3 |
|---|---|---|---|---|
| directly after lamination | 0.82 | 0.78 | 0.74 | 0.78 |
| 7 days storage at 23°C | 0.79 | 0.79 | 0.77 | 0.76 |
| 19 days storage at 23°C | 0.70 | 0.81 | 0.76 | 0.80 |
| 6 days storage at 80 °C | 0.06 | 0.93 | 0.84 | 0.96 |
| 13 days storage at 80 °C | 0.01 | 0.96 | 0.84 | 1.04 |
| 20 days storage at 80 °C | 0.06 | 0.98 | 0.89 | 1.15 |

Table 2

| **minimum radial deviation** | C1 | Ex. 1 | Ex. 2 | Ex. 3 |
|---|---|---|---|---|
| directly after lamination | 0.21 | 0.22 | 0.21 | 0.23 |
| 7 days storage at 23°C | 0.18 | 0.24 | 0.22 | 0.23 |
| 19 days storage at 23°C | 0.12 | 0.25 | 0.21 | 0.25 |
| 6 days storage at 80 °C | - 0.53 | 0.30 | 0.26 | 0.37 |
| 13 days storage at 80 °C | - 0.63 | 0.33 | 0.27 | 0.40 |
| 20 days storage at 80 °C | - 0.61 | 0.33 | 0.30 | 0.38 |

These results are also shown graphically in Figs. 6 and 7.

Tables 3 and 4 contain a portion of the information found in Tables 1 and 2, but focus on the changes in maximum radial deviation after heating the laminated discs for 6 days at 80°C. Comparative Example 1 shows a change in both the maximum and minimum radial deviations of greater than 0.4 °. Examples 1 to 3 show a change of less than 0.4 ° after the heat treatment for 6 days at 80°C.

Table 3

| Example | Max. radial deviation directly after lamination [°] | Max. radial deviation after 6 days at 80°C [°] | Difference in max. radial deviation [°] |
|---|---|---|---|
| C1 | 0.82 | 0.06 | - 0.76 |
| 1 | 0.78 | 0.93 | 0.15 |
| 2 | 0.74 | 0.84 | 0.10 |
| 3 | 0.78 | 0.96 | 0.18 |

Table 4

| Example | Min. radial deviation directly after lamination [°] | Min. radial deviation after 6 days at 80°C [°] | Difference in min. radial deviation [°] |
|---|---|---|---|
| C1 | 0.21 | - 0.53 | - 0.74 |
| 1 | 0.22 | 0.30 | 0.08 |
| 2 | 0.21 | 0.26 | 0.05 |
| 3 | 0.23 | 0.37 | 0.14 |

**Examples 4 to 14**

The cover film of Example 1 was exposed to a variety of drying conditions as shown in Table 5 as part of a

designed experiment to find optimum drying parameters.

The polycarbonate film was placed in a circulating air oven and heated at the temperatures for the length of time indicated in Table 5. The methylene chloride content of the samples was measured after 5 min, 17.5 min, 30 min and 900 min. The values are the average of two samples. The measured methylene chloride values are summarized in Table 5.

The results of the measurements are also shown in Figure 8.

Shrinkage tests were also run on the cover films of Examples 4 to 14. The shrinkage of the films on heating them for 8 days at 80 °C was detemined individually for the down-web and cross-web directions and the average shrinkage was calculated from these values. Table 5 and Fig. 9 show the results of the measurements and the average shrinkage values in the down-web and the cross-web directions. A good correlation between the initial solvent content and the shrinkage of the films can be observed. There are no significant differences between the shrinkage measured in the down-web and cross-web directions.

Table 5

| Example | Heat treatment [°C] | Heat treatment [min] | $CH_2Cl_2$ content [wt.-%] | Shrinkage (down-web) [%] | Shrinkage (cross-web) [%] | Mean shrinkage [%] |
|---|---|---|---|---|---|---|
| 4 | untreated | 0 | 0.80 | 0.148 | 0.144 | 0.146 |
| 5 | 80 | 5 | 0.80 | 0.151 | 0.149 | 0.150 |
| 6 | 80 | 17.5 | 0.65 | 0.129 | 0.149 | 0.139 |
| 7 | 80 | 30 | 0.62 | 0.126 | 0.133 | 0.130 |
| 8 | 110 | 5 | 0.55 | 0.101 | 0.102 | 0.101 |
| 9 | 110 | 17.5 | 0.28 | 0.054 | 0.062 | 0.058 |
| 10 | 110 | 30 | 0.15 | 0.034 | 0.034 | 0.034 |
| 11 | 140 | 5 | 0.08 | 0.014 | 0.013 | 0.014 |
| 12 | 140 | 17.5 | 0.00 | 0.008 | - 0.004 | 0.002 |
| 13 | 140 | 30 | 0.00 | - 0.002 | - 0.001 | - 0.001 |
| 14 | 130 | 900 | 0.00 | - 0.002 | - 0.006 | - 0.004 |

The cover films of Examples 4 to 14 were laminated to annealed disk substrates as described in Comparative Example 1. The laminated disks were then heated in a circulating air oven for 11 days at 80°C. The radial deviation of the disks was measured before and after the annealing. The difference between these values, i.e. the difference in radial deviation, illustrates the influence of annealing on the radial deviation. The results are shown in Tables 6 and 7 and Figures 10 and 11. Each value is the average of two samples.

Table 6

| Example | methylene chloride content [%] | minimum radial deviation directly after lamination [°] | minimum radial deviation after 11 days at 80°C [°] | difference in minimum radial deviation [°] |
|---|---|---|---|---|
| 4 | 0.80 | 0.07 | - 0.07 | - 0.14 |
| 5 | 0.80 | 0.04 | - 0.07 | - 0.11 |
| 6 | 0.65 | 0.03 | - 0.04 | - 0.07 |
| 7 | 0.62 | 0.06 | - 0.11 | - 0.17 |
| 8 | 0.55 | 0.02 | 0.46 | 0.44 |
| 9 | 0.28 | - 0.04 | 0.25 | 0.29 |
| 10 | 0.15 | - 0.03 | 0.16 | 0.19 |
| 11 | 0.08 | -0.03 | - 0.13 | -0.10 |
| 12 | 0.00 | - 0.04 | - 0.27 | - 0.23 |

Table 6 (continued)

| Example | methylene chloride content [%] | minimum radial deviation directly after lamination [°] | minimum radial deviation after 11 days at 80°C [°] | difference in minimum radial deviation [°] |
|---|---|---|---|---|
| 13 | 0.00 | - 0.08 | - 0.35 | - 0.27 |
| 14 | 0.00 | - 0.04 | - 0.29 | - 0.25 |

Table 7

| Example | methylene chloride content [%] | maximum radial deviation directly after lamination [°] | maximum radial deviation after 11 days at 80° C [°] | difference in maximum radial deviation [°] |
|---|---|---|---|---|
| 4 | 0.80 | 0.50 | 0.21 | - 0.29 |
| 5 | 0.80 | 0.44 | 0.20 | - 0.24 |
| 6 | 0.65 | 0.44 | 0.24 | - 0.20 |
| 7 | 0.62 | 0.43 | 0.30 | - 0.13 |
| 8 | 0.55 | 0.41 | 1.12 | 0.71 |
| 9 | 0.28 | 0.35 | 0.81 | 0.46 |
| 10 | 0.15 | 0.31 | 0.56 | 0.25 |
| 11 | 0.08 | 0.31 | 0.13 | - 0.18 |
| 12 | 0.00 | 0.31 | - 0.02 | - 0.33 |
| 13 | 0.00 | 0.29 | - 0.01 | - 0.30 |
| 14 | 0.00 | 0.31 | - 0.05 | - 0.36 |

The Figures 10 and 11 show that the difference in radial deviation of the discs is significantly reduced if the amount of residual solvent remaining in the discs is less than 0.5 wt.-%. An amount of more than 0.6 wt.-% might be helpful in some applications since a high amount of solvent seems to act as a plasticizer for the employed polymer. Such an amount of solvent in the polycarbonate film therefore would also lead to flat disks with a very low radial deviation if the disks are exposed to oven annealing at 80°C after lamination. The small negative deviation at zero content of solvent can be explained by the thermal relaxation of the disc itself. In total the smallest change in radial deviation is observed at a solvent content of approx. 0.1 wt.-% which correlates with a polycarbonate shrinkage of 0.02 %.

## Claims

1. Optical storage medium from which information can be read out and/or into which information can be recorded with a light beam 6, said optical storage medium comprising one or more base members 1 bearing on the side of the base members 1 on which the light beam 6 is incident, one or more information storage layers 3, at least one light-transmissive cover film 5 and one or more light-transmissive adhesive layers 4 bonding said cover films 5 to each other, to the surface 2 of the base members 1 on which the light beam 6 is incident and/or to one or more information storage layers 3, said cover films 5 exhibiting a vertical birefringence of less than 0.001 at 20 °C at least at the wavelength or wavelength spectrum, respectively, of said light beam 6 and whereby the difference between the maximum radial deviation of the optical storage medium before and after being subjected to a temperature of 80 °C for 6 days is 0.4 degrees or less.

2. Optical storage medium from which information can be read out and/or into which information can be recorded with a light beam 6, said optical storage medium comprising one or more base members 1 bearing on the side of the base members 1 on which the light beam 6 is incident, one or more information storage layers 3, at least one light-transmissive cover film 5 and one or more light-transmissive adhesive layers 4 bonding said cover films 5 to each other, to the surface 2 of the base members 1 on which the light beam 6 is incident and/or to one or more

information storage layers 3, at least one of said cover films 5 being obtainable by solvent casting and whereby the difference between the maximum radial deviation of the optical storage medium before and after being subjected to a temperature of 80 °C for 6 days is 0.4 degrees or less.

**3.** Optical storage medium according to claim 2 wherein at least one of the said cover films 5 exhibits a vertical birefringence of less than 0.001 at 20 °C at least at the wavelength or wavelength spectrum, respectively, of said light beam 6.

**4.** Optical storage medium according to any of claims 1 to 3 wherein the difference between the maximum radial deviation of the optical storage medium before and after being subjected to a temperature of 80 °C for 11 days is 0.4 degrees or less.

**5.** Optical storage medium according to any of claims 1 to 4 comprising one base member 1 the surface 2 of which bearing a structure of pits on which an information storage layer 3 is formed.

**6.** Optical storage medium according to any of claims 1 to 5 wherein said cover film or cover films exhibit an in-plane retardation of less than ± 30 nm at 20 °C at least at the wavelength or wavelength spectrum, respectively, of said light beam 6.

**7.** Optical storage medium according to any of claims 1 to 6 comprising one light-transmissive cover film 5 bonded to the information storage layer 3 on the surface 2 of the base member 1 by means of a light-transmissive adhesive layer 4.

**8.** Optical storage medium according to any of claims 1 to 7 wherein the thickness of the light-transmissive cover film or cover films 5 is from 10 µm to 200 µm.

**9.** Optical storage medium according to any of claims 1 to 8 wherein the cover film or cover films 5 are obtainable by extrusion, solvent casting or polymerization casting.

**10.** Optical storage medium according to any of claims 1 to 9 wherein said adhesive layer or layers 4 are pressure-sensitive adhesive layers.

**11.** Optical storage medium according to claim 10 wherein the thickness of the light-transmissive adhesive layer or layers 4 is from 5 µm to 100 µm.

**12.** Optical storage medium according to any of claims 1 to 11 wherein the variation of the thickness of each light-transmissive cover film 5 and/or the variation of the thickness of the optical storage medium introduced by each light-transmissive cover film 5 as measured across an arbitrarily selected cross-section of the optical storage medium over its entire extension is not more than about ± 3 µm.

**13.** Optical storage medium according to any of claims 1 to 12 wherein the variation of the thickness of each light-transmissive adhesive layer 4 and/or the variation of the thickness of the optical storage medium introduced by each light-transmissive adhesive layer 4 as measured across an arbitrarily selected cross-section of the optical storage medium over its entire extension is not more than about ± 3 µm.

**14.** Optical storage medium according to any of claims 1 to 13 comprising one light-transmissive cover film 5 and one light-transmissive adhesive layer 4 wherein the sum of the variation of the thickness of the light-transmissive cover film 5 or the variation of the thickness of the optical storage medium introduced by the light-transmissive cover film 5, respectively, and the variation of the thickness of the light-transmissive adhesive layer 4 or the variation of the thickness of the optical storage medium introduced by the light-transmissive adhesive layer 4, respectively, is not more than ± 4 µm, whereby such sum is measured across an arbitrarily selected cross-section of the optical storage medium over its entire extension.

**15.** Method of preparing an optical storage medium according to claim 1 or 2 comprising:

(1) providing at least one base member 1 having a surface 2 on which a light beam 6 is incident, said surface optionally comprising a structure of pits bearing an information storage layer 3,
(2) providing at least one light-transmissive cover film 5 the inner surface of which optionally comprising a

structure of lands, grooves and/or pits bearing an information storage layer 3;
(3) providing at least one light-transmissive adhesive layer;
(4) assembling the at least one base member, the at least one light-transmissive cover film and the at least one light-transmissive adhesive layer to form an optical storage medium whereby the difference between the maximum radial deviation of the optical storage medium before and after being subjected to a temperature of 80 °C for 6 days is 0.4 degrees or less.

**16.** Method according to claim 15 wherein the at least one light-transmissive cover film 5 is provided so as to have a content of volatiles of less than 0.5 % by weight based on the total weight of the cover film.

**17.** Method according to claim 16 wherein the cover film is provided so as to have a content of volatiles of less than 0.3 % by weight based on the total weight of the cover film.

**18.** Method according to claim 15 wherein the light-transmissive cover film 5 and the light-transmissive adhesive layer 4 are provided in the form of a multilayer film comprising, in the order given, a releaseable protective film 7, the light-transmissive cover film 5, the light-transmissive adhesive layer 4 and a release liner, optionally further comprising between the light-transmissive cover film 5 and the light-transmissive adhesive layer one or more further light-transmissive cover films 5' bonded to each other by means of one or more further light-transmissive adhesive layers 4'.

**19.** Method according to claim 18 wherein the optical storage medium is prepared by removing said release liner 8 form the multilayer film 12 and laminating the multilayer film 12 to the surface 2 of the information storage layer 3 on the surface 2 of the base member 1.

**20.** Method for improving the storage stability of an optical storage medium from which information can be read out and/or into which information can be recorded with a light beam 6, said optical storage medium comprising one or more base members 1 bearing on the side of the base members 1 on which the light beam 6 is incident, one or more information storage layers 3, at least one light-transmissive cover film 5 and one or more light-transmissive adhesive layers 4 bonding said cover films 5 to each other, to the surface 2 of the base members 1 on which the light beam 6 is incident and/or to one or more information storage layers 3, by employing at least one solvent cast cover film 5 which is selected so that the difference between the maximum radial deviation of the optical storage medium before and after being subjected to a temperature of 80 °C for 6 days is 0.4 degrees or less.

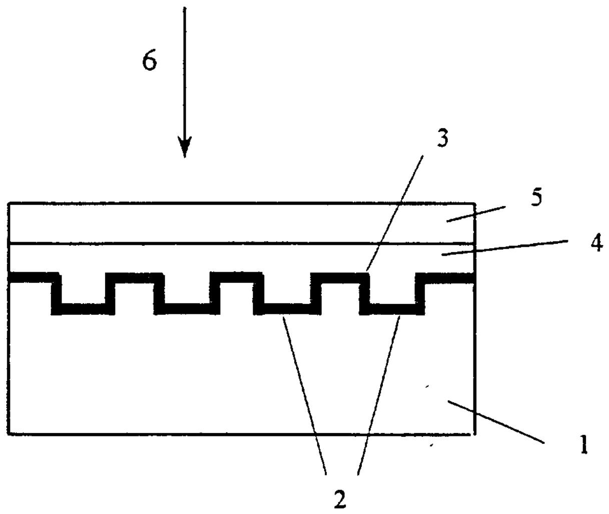


*Fig. 1a*

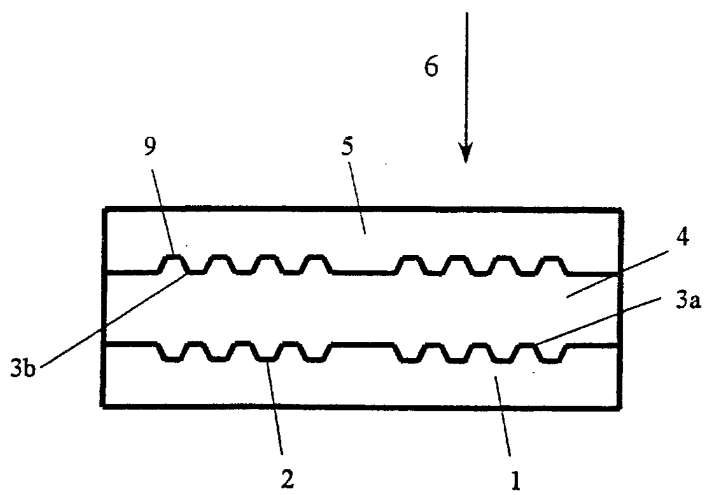


*Fig. 1b*

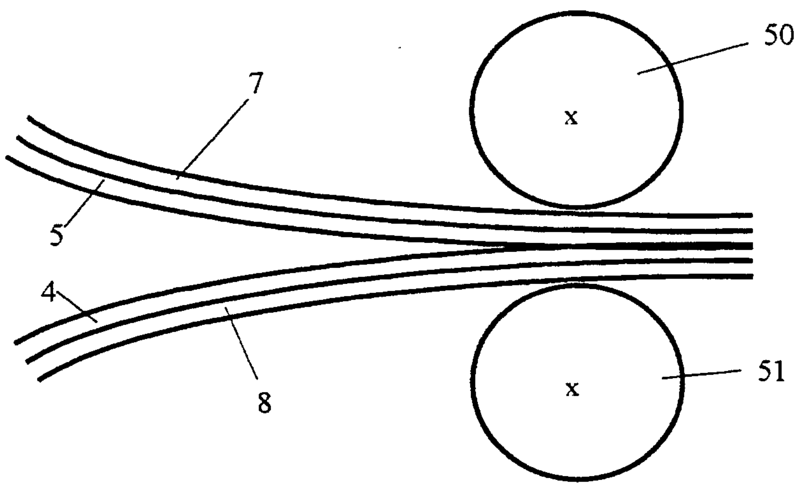


Fig. 2

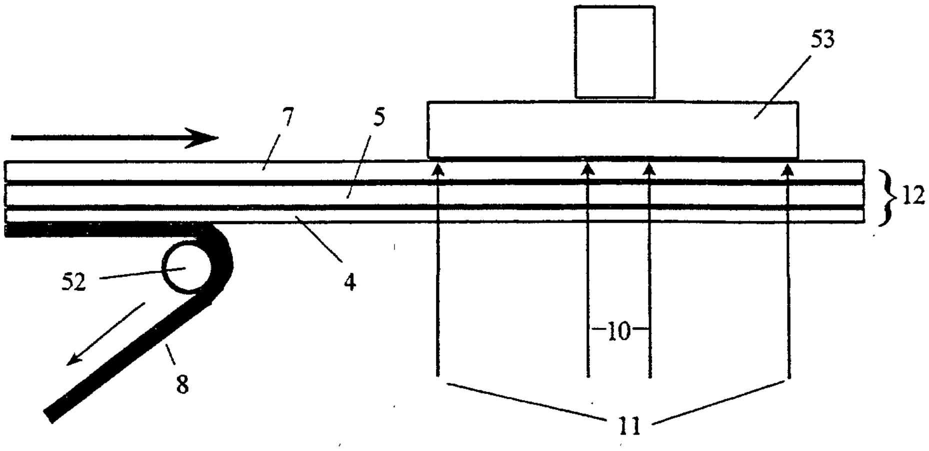


Fig. 3

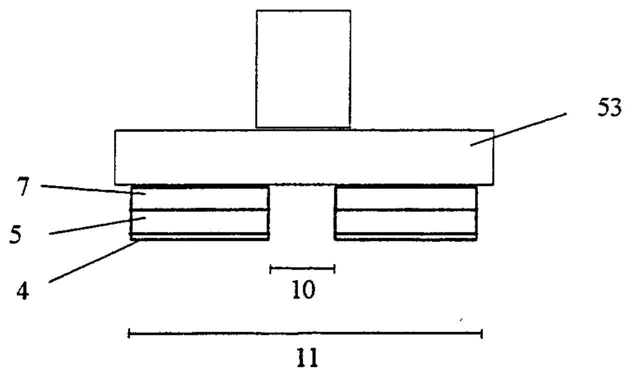


Fig. 4

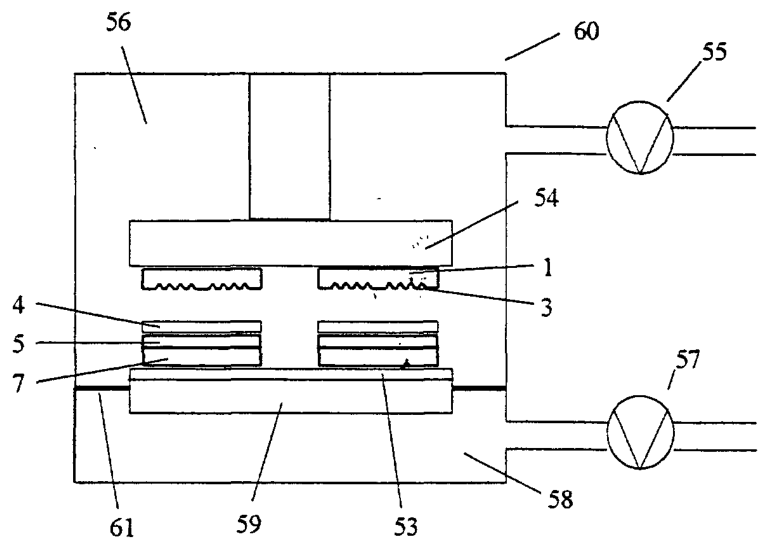


*Fig. 5*

Figure 6

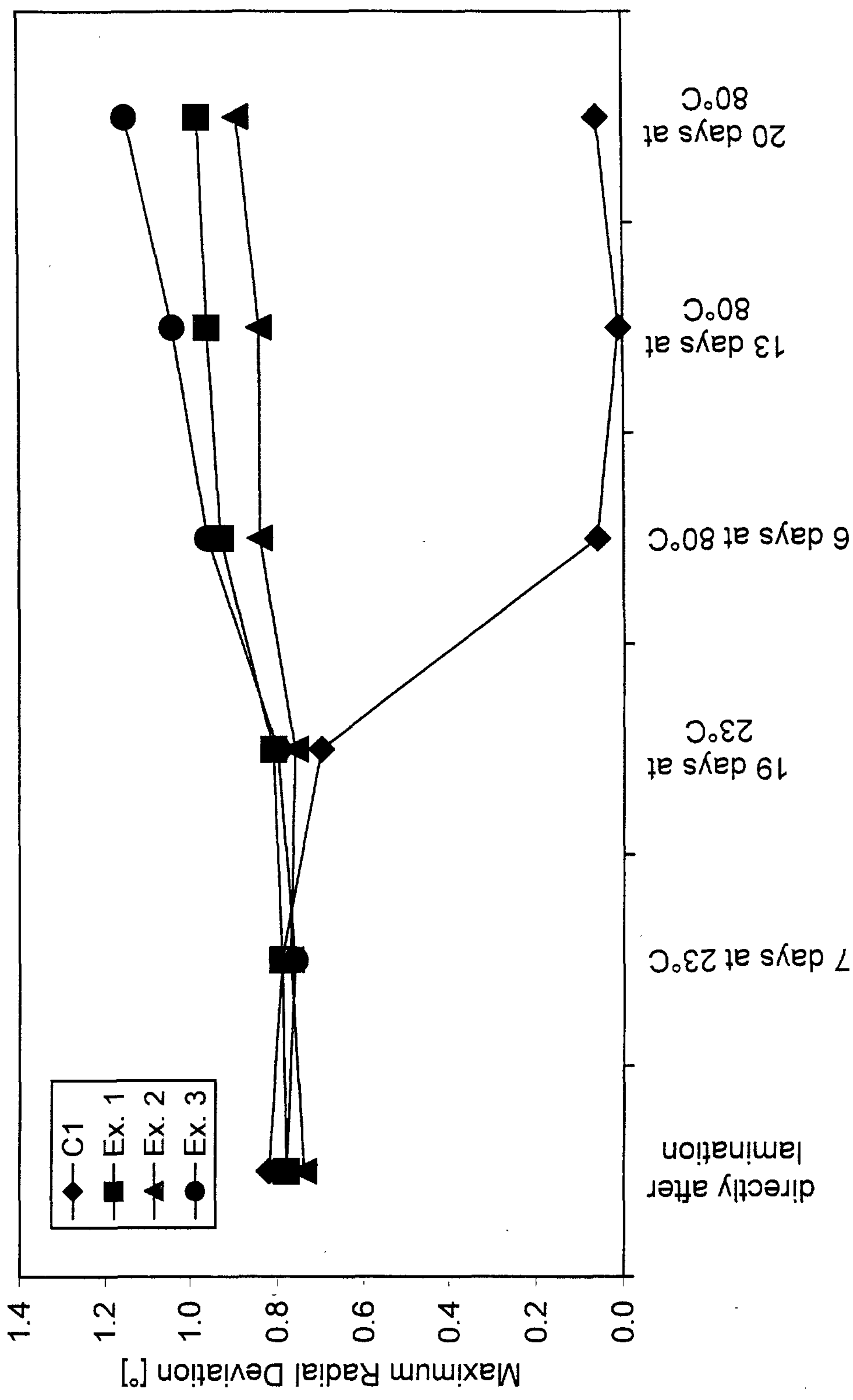
C1
Ex. 1
Ex. 2
Ex. 3
Maximum Radial Deviation [°]
0.0
0.2
0.4
0.6
0.8
1.0
1.2
1.4
directly after lamination
7 days at 23°C
19 days at 23°C
6 days at 80°C
13 days at 80°C
20 days at 80°C

Figure 7

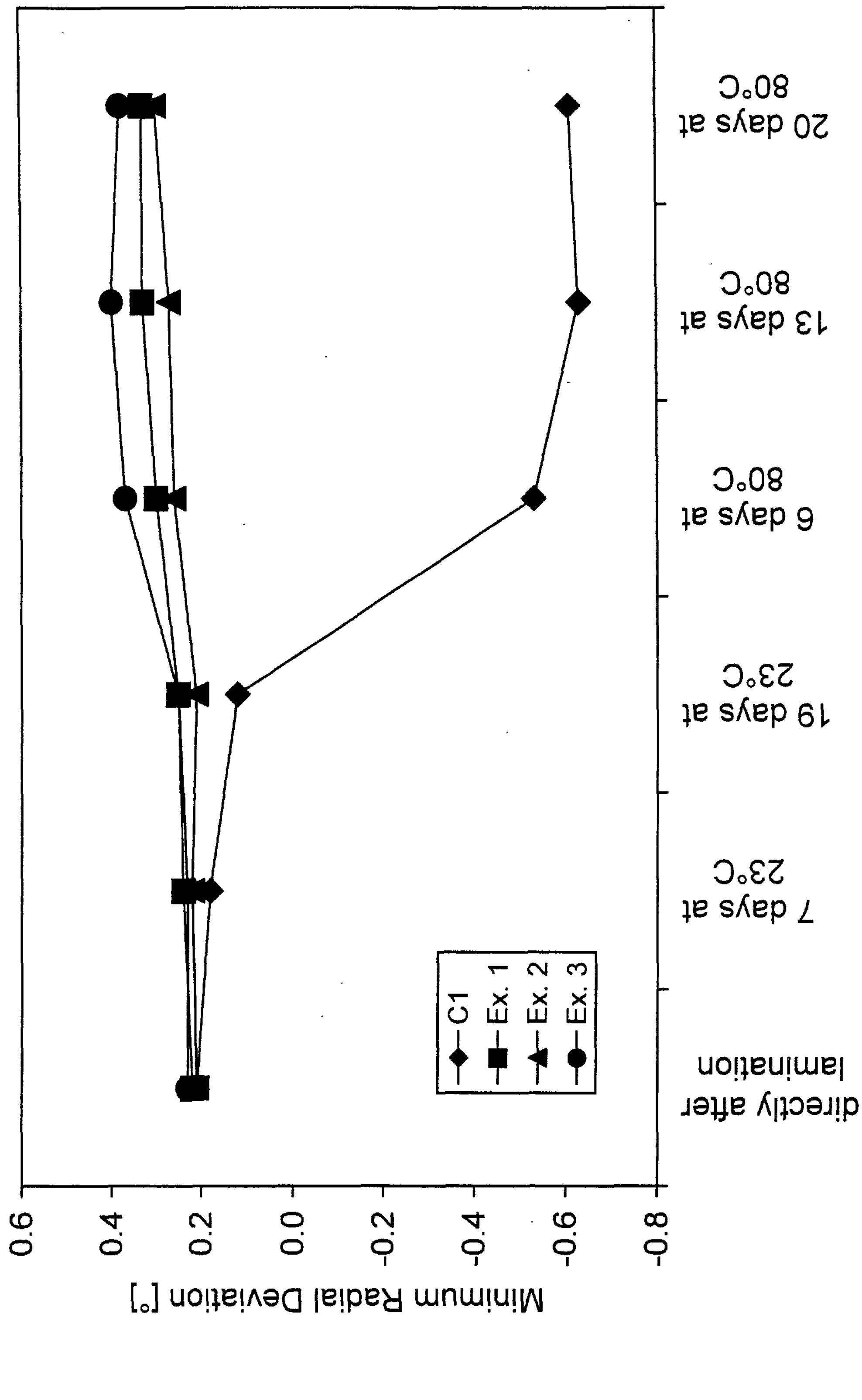
Minimum Radial Deviation [°]
0.6
0.4
0.2
0.0
-0.2
-0.4
-0.6
-0.8
directly after lamination
7 days at 23°C
19 days at 23°C
6 days at 80°C
13 days at 80°C
20 days at 80°C
C1
Ex. 1
Ex. 2
Ex. 3

Figure 8

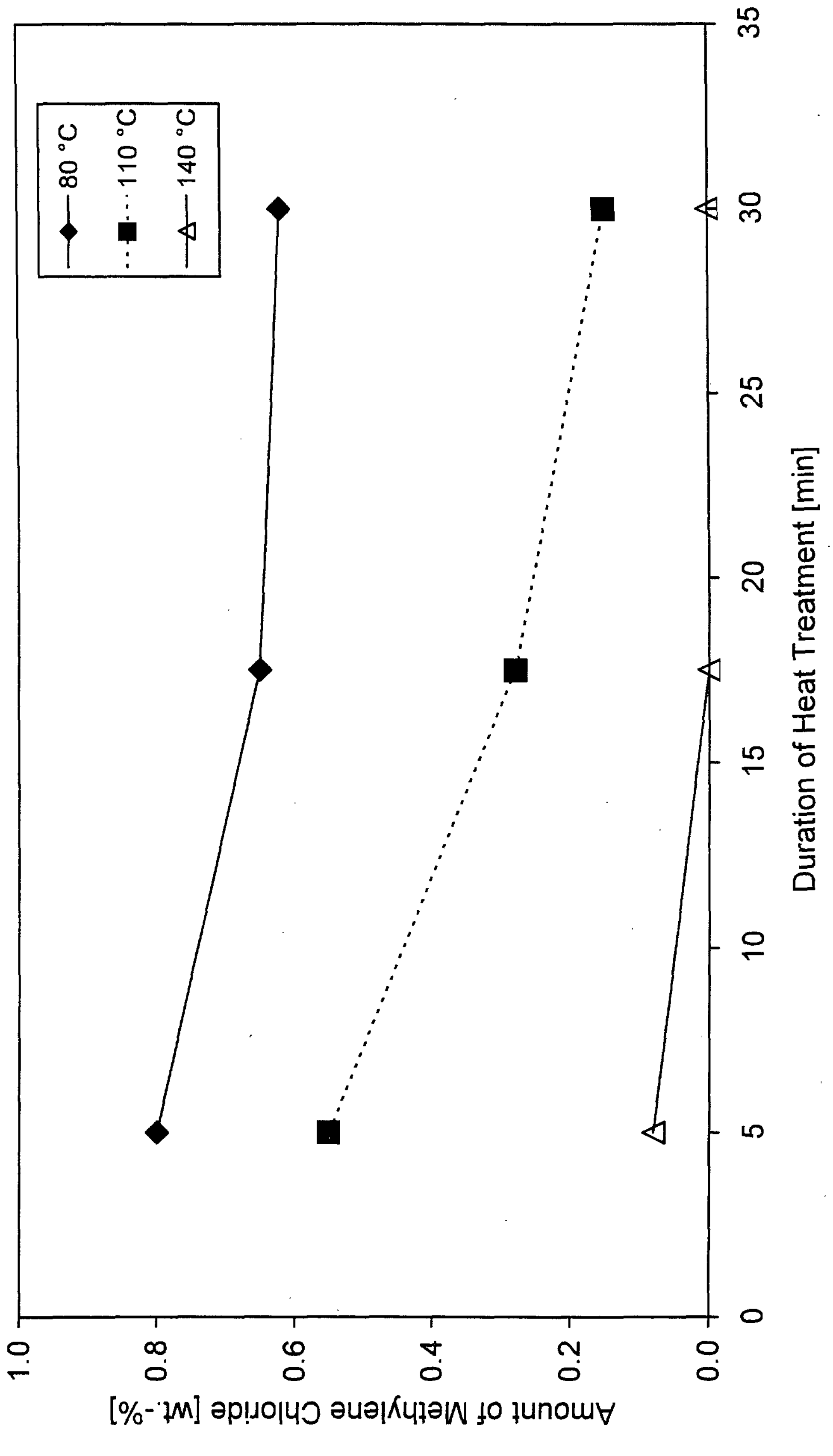
80 °C
110 °C
140 °C
Amount of Methylene Chloride [wt.-%]
1.0
0.8
0.6
0.4
0.2
0.0
Duration of Heat Treatment [min]
0
5
10
15
20
25
30
35

Figure 9

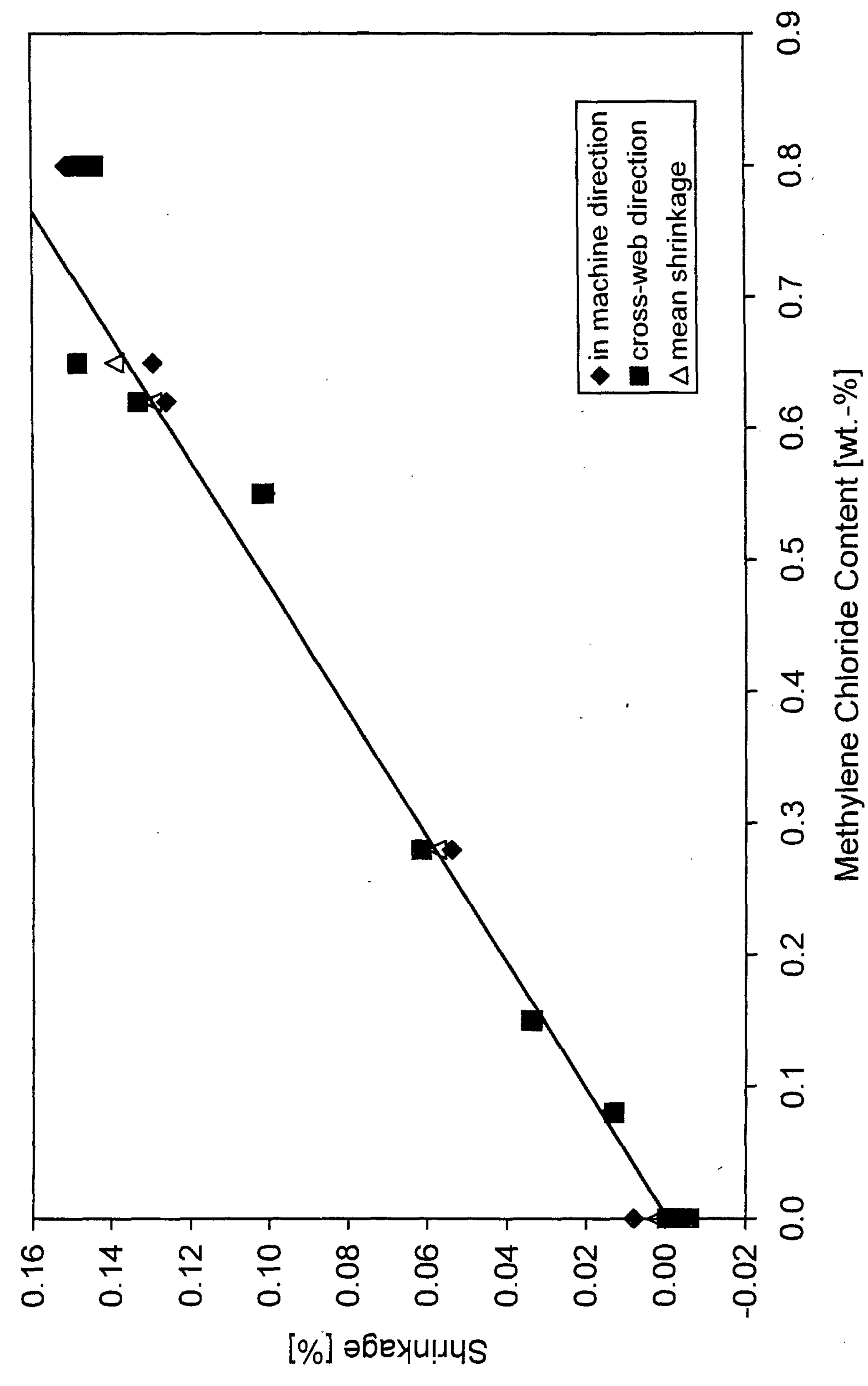

Shrinkage [%]
0.16
0.14
0.12
0.10
0.08
0.06
0.04
0.02
0.00
-0.02
0.0
0.1
0.2
0.3
0.4
0.5
0.6
0.7
0.8
0.9
Methylene Chloride Content [wt.-%]
in machine direction
cross-web direction
Δ mean shrinkage

Figure 10

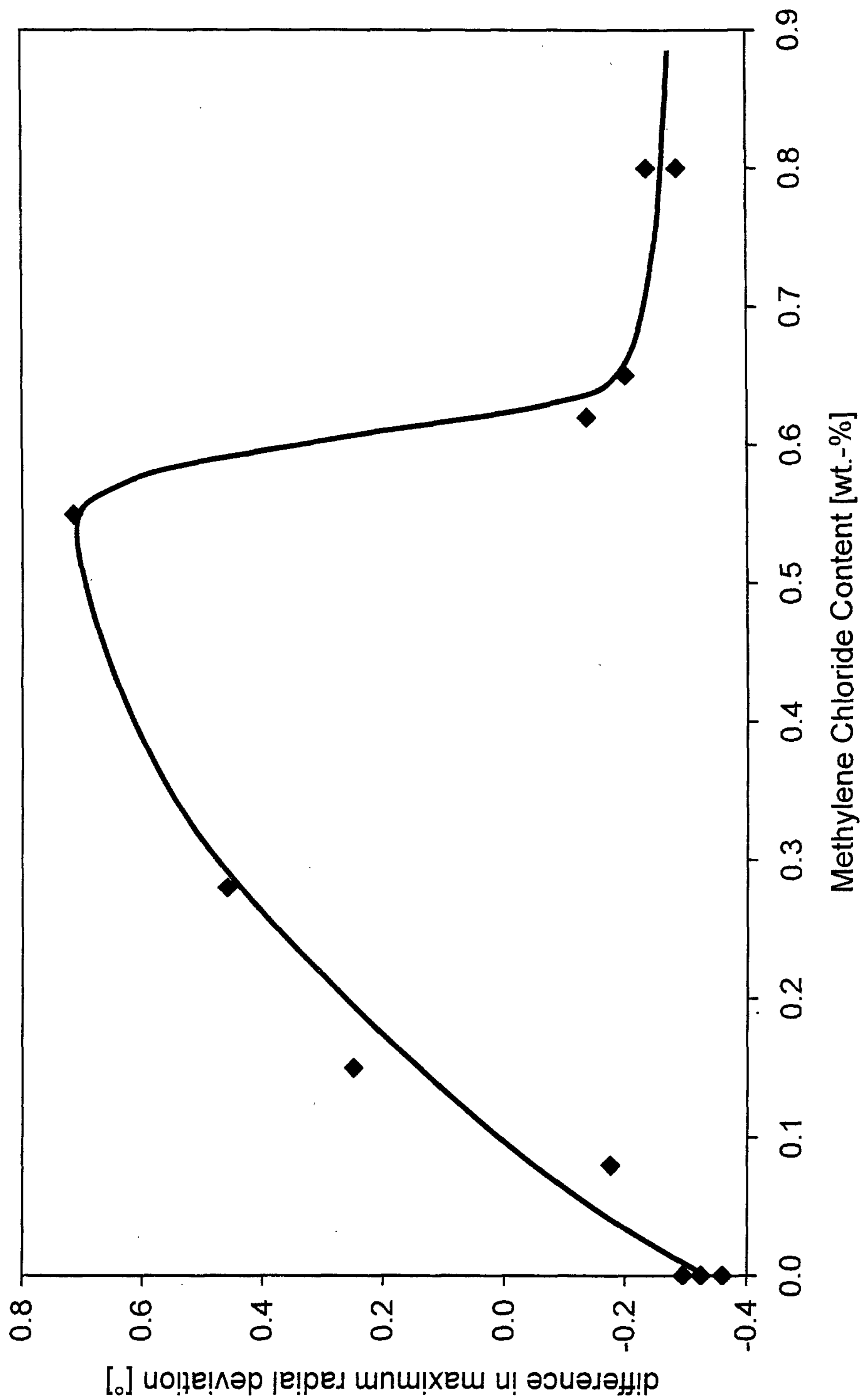
difference in maximum radial deviation [°]
0.8
0.6
0.4
0.2
0.0
-0.2
-0.4
0.0
0.1
0.2
0.3
0.4
0.5
0.6
0.7
0.8
0.9
Methylene Chloride Content [wt.-%]

Figure 11

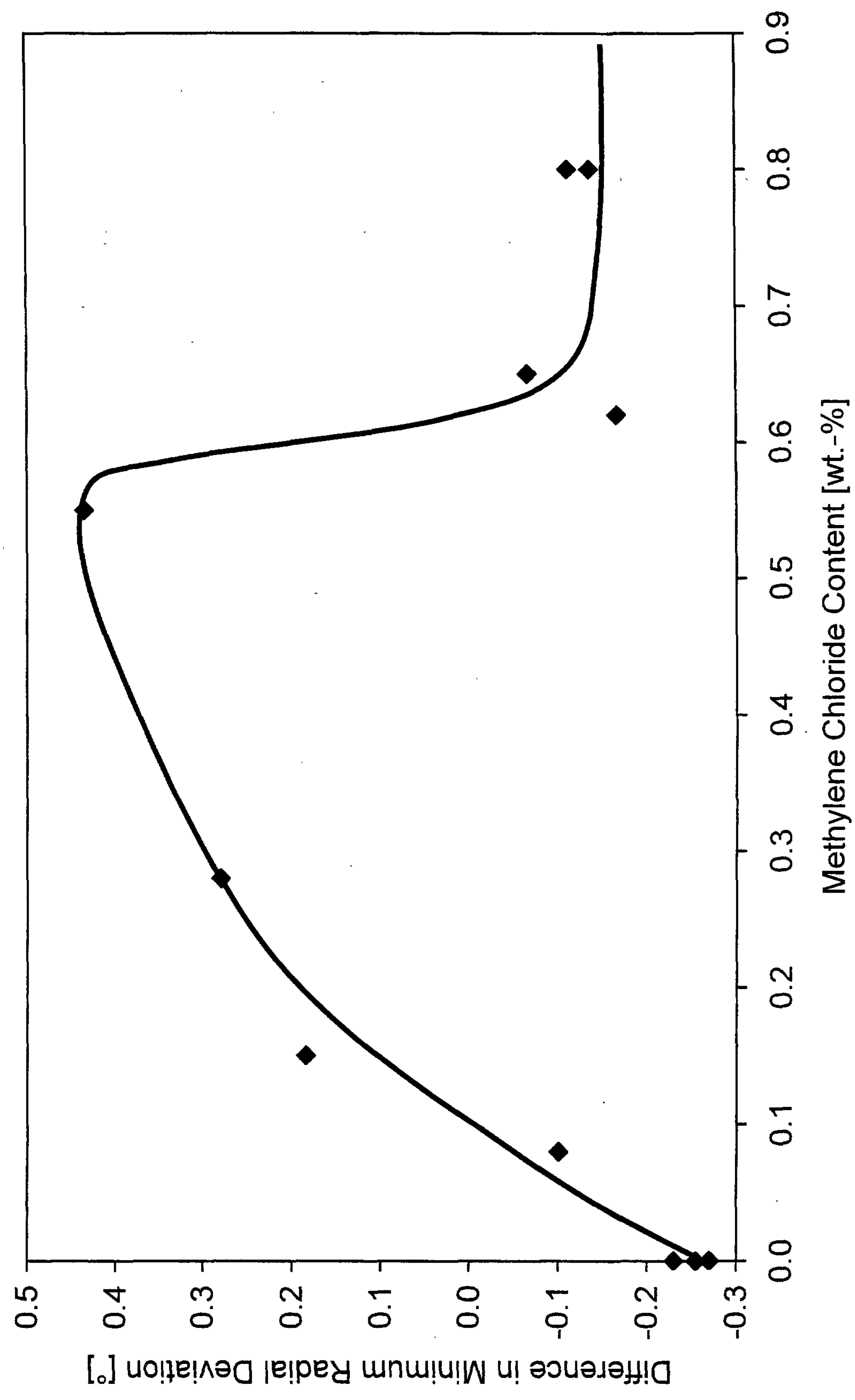
Difference in Minimum Radial Deviation [°]
0.5
0.4
0.3
0.2
0.1
0.0
-0.1
-0.2
-0.3
0.0
0.1
0.2
0.3
0.4
0.5
0.6
0.7
0.8
0.9
Methylene Chloride Content [wt.-%]